# EUROPEAN PATENT APPLICATION

(11) **EP 2 472 406 A1**
(43) Date of publication of application: **04.07.2012**
(21) Application number: 10821694.6
(22) Date of filing: 24.08.2010
(51) Int. Cl.: G06F 13/00, H04N 7/173

(54) **CONTENT DISTRIBUTION SYSTEM**

(30) Priority: 08.10.2009 JP 2009233965
(71) Applicant: NEC Corporation, Tokyo 108-8001 (JP)
(72) Inventor: ISHIKAWA, Kazushige, Tokyo 108-8001 (JP); NOGAMI, Kousuke, Tokyo 108-8001 (JP)
(74) Representative: Betten & Resch
(86) International application number: PCT/JP2010/005190
(87) International publication number: WO 2011/043016

(57) **Abstract**

A content distribution system 100 includes a user terminal 110, an application server system 120, and a connection control system 130. The system 120 acquires terminal attribute information representing the capability, of the user terminal 110, of outputting content based on content data, and selects content data based on the terminal attribute information. The system 130 establishes a connection having a communication bandwidth necessary for transmitting the selected content data from the system 120 to the user terminal 110. The system 120 transmits the selected content data to the user terminal 110 using the established connection.

## Description

### TECHNICAL FIELD

The present invention relates to a content distribution system for transmitting content data representing content to a user terminal.

### BACKGROUND ART

Patent Document 1 discloses a content distribution system including a content transmission device, a content reception device, and a connection control device (SIP (Session Initiation Protocol) server).

In this content distribution system, the content reception device transmits a content transmission request to the connection control device. When the connection control device receives the content transmission request, the connection control device transmits the content transmission request to the content transmission device, and also establishes connection (session) having a predetermined communication bandwidth between the content transmission device and the content reception device.

Then, the content transmission device transmits content data to the content reception device using the connection established by the connection control device. According to this content distribution system, as the communication bandwidth of the connection established between the content transmission device and the content reception device is secured, it is possible to prevent degradation of the communication quality when transmitting content data from the content transmission device to the content reception device.

Further, as the basis for maintaining the quality of a content distribution service, standardization of a network of communication bandwidth securing type called NGN (Next Generation Network) is under way.

For example, in the content distribution system described in Non-Patent Document 1, when a user of a user terminal (content reception device) selects content data representing content that the user desires to view, the user terminal transmits a content transmission request including data identification information for identifying the selected content data, to the connection control device. The content transmission request includes communication bandwidth information representing a communication bandwidth necessary for transmitting the selected content date to the user terminal. The connection control device performs processing to secure the communication band having the communication bandwidth represented by the communication bandwidth information includes in the content transmission request.

[Patent Document 1] JP 2008-153896 A

[Non-Patent Document 1] "Telecommunications and Internet converged Services and Protocols for Advanced Networking (TISPAN); IMS-based IPTV stage 3 specification", Technical Specification (ETSI TS 183 063 V2.1.0), European Telecommunications Standards Institute, June 2008, p. 23-26, 72-75

Meanwhile, the case where a user wishes to continue viewing of content, which has been viewed using a first user terminal, using a second user terminal, in which the terminal attribute information of the first user terminal and the terminal attribute information of the second user terminal differ from each other, is assumed. It should be noted that the terminal attribute information, is information representing the capability, of the user terminal, of outputting content based on content data. For example, the terminal attribute information, includes information, representing the resolution of the display of the user terminal, the information processing capability of the user ten-ninal, and the like. To be specific, the case where the first user terminal is a large-screen television and the second user terminal is a mobile terminal is assumed, for example.

In that case, if the second user terminal transmits a content transmission request including data identification information which is identical to the data identification information induced in the content transmission request transmitted by the first user terminal, for example, the second user terminal may receive content data that the second user terminal cannot output (is incapable of outputting). In this way, there has been a problem that the above-described content distribution system may transmit, to a user terminal, content data that the user terminal is incapable of outputting.

### SUMMARY

In view of the above, an object of the present invention is to provide a content distribution system capable of solving the above-described problem that "in a content distribution system configured to prevent degradation of the communication quality when transmitting content data, there is a case where content data, which is not able to be output, is transmitted to a user terminal."

In order to achieve such an object, a content distribution system, which is an aspect of the present invention, includes a user terminal, an application server system, and a connection control system, wherein
the application server system includes:
a terminal attribute information acquisition means for acquiring terminal attribute information representing capability of the user terminal, the capability being a capability that based on content data representing content, the user terminal outputs the content; and
a data selection means for selecting content data representing content based on the acquired terminal attribute information,
the connection control system includes
a connection establishing means for establishing a connection between the application server system and the user terminal, the connection having a communication bandwidth necessary for transmitting the selected content data from the application server system to the user terminal, and
the application server system further includes
a content transmission means for transmitting the selected content data to the user terminal with use of the established connection,

Further, a content distribution method, according to another aspect of the present invention, is a method applied to a content distribution system including a user terminal, an application server system, and a connection control system. The method includes:
acquiring, by the application server system, terminal attribute information representing a capability of the user terminal, the capability being a capability that based on content data representing content, the user terminal outputs the content;
selecting, by the application server system, content data representing content based on the acquired terminal attribute information,
establishing, by the connection control system, a connection between the application server system and the user terminal, the connection having a communication bandwidth necessary for transmitting the selected content data from the application server system to the user terminal, and
transmitting, by the application server system, the selected content data to the user terminal with use of the established connection.

Further, a server device, which is another aspect of the present invention, includes:
a terminal attribute information acquisition means for acquiring terminal attribute information representing a capability of a user terminal, the capability being a capability that based on content data representing content, the user terminal outputs the content, and
   a data selection means for selecting content data representing content based on the acquired terminal attribute information.

Further, a program, which is another aspect of the present invention, is a program causing a server device to realize:
a terminal attribute information acquisition means for acquiring terminal attribute information representing a capability of a user terminal, the capability being a capability that based on content data representing content, the user terminal outputs the content; and
a data selection means for selecting content data representing content based on the acquired terminal attribute information.

Further, a server device, which is another aspect of the present invention, includes
a connection establishing means for establishing a connection between an application server system and a user terminal, the connection having a communication bandwidth necessary for transmitting content data selected by the application server system from the application server system to the user terminal,

Further, a program, which is another aspect of the present invention, is a program for causing a server device to realize
a connection establishing means for establishing a connection between an application server system and a user terminal, the connection having a communication bandwidth necessary for transmitting content data selected by the application server system from the application server system to the user terminal.

As the present invention is configured as described above, it is possible to prevent degradation of the communication quality when transmitting content data, and to prevent transmission of content data, which is not able to be output, to a user terminal.

### BRIEF DESCRIPTION OF DRAWINGS

Fig. 1 is a diagram showing a schematic configuration of a content distribution system according to a first exemplary embodiment of the present invention.
Fig. 2 is a block diagram showing schematic functions the content distribution system according to the first exemplary embodiment of the present invention.
Fig. 3 is a table showing terminal identification information, resolution information, and capability level information, stored in a service control server according to the first exemplary embodiment of the present invention.
Fig. 4 is a table showing content identification information, data identification information, resolution information, minimum level information, maximum level information, and communication bandwidths, stored in the service control server according to the first exemplary embodiment of the present invention.
Fig. 5 is a sequence chart showing operation of the content distribution system according to the first exemplary embodiment of the present invention.
Fig. 6 is a sequence chart showing operation of the content distribution system following the operation shown in Fig. 5.
Fig. 7 is a drawing showing a content transmission request transmitted from a user terminal to a connection control server.
Fig. 8 is a drawing showing a redirect request transmitted from a service control server to a connection control server.
Fig. 9 is a drawing showing a redirect request transmitted from a service control server to a connection control server.
Fig. 10 is a diagram showing a content transmission request transmitted from a user terminal to a connection control server in response to a redirect request.
Fig. 11 is a diagram showing a transmission permission notice transmitted from a media server to a connection control server.
Fig. 12 is a block diagram showing schematic functions of a content distribution system according to a second exemplary embodiment of the present invention.
Fig. 13 is a sequence chart showing operation of the content distribution system according to the second exemplary embodiment of the present invention.
Fig. 14 is a sequence chart showing operation of the content distribution system following the operation shown in Fig. 13.
Fig. 15 is a block diagram showing schematic functions a content distribution system according to a third exemplary embodiment of the present invention.
Fig. 16 is a table showing communication band specifying information, communication bandwidths, and status information, stored in a connection control server according to the third exemplary embodiment of the present invention.
Fig. 17 is a sequence chart showing operation of the content distribution system according to the third exemplary embodiment of the present invention,
Fig. 18 is a sequence chart showing operation of the content distribution system following the operation shown in Fig. 17.
Fig. 19 is a sequence chart showing operation of a content distribution system according to a first exemplary Variation of the third exemplary embodiment of the present invention,
Fig. 20 is a sequence chart showing operation of the content distribution system following the operation shown in Fig. 19.
Fig. 21 is a sequence chart showing operation of a content distribution system according to a second exemplary variation of the third exemplary embodiment of the present invention.
Fig. 22 is a sequence chart showing operation of the content distribution system following the operation shown in Fig. 21.
Fig. 23 its a block diagram showing schematic functions of a content distribution system according to a fourth exemplary embodiment of the present invention.

### EXEMPLARY EMBODIMENTS

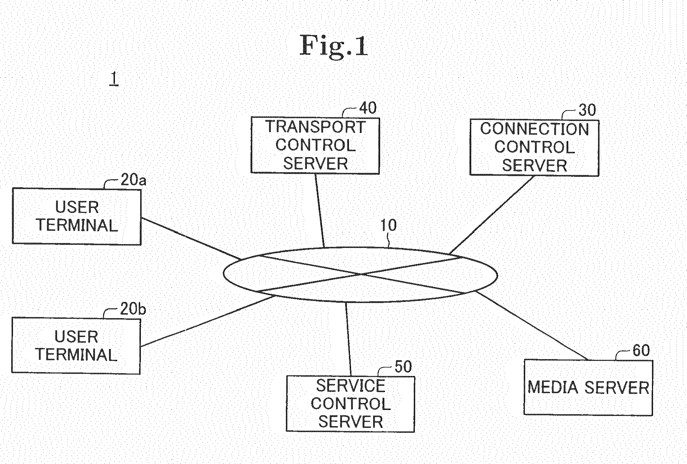

Hereinafter, exemplary embodiments of a content distribution system, a content distribution method, a server device, and a program, according to the present invention, will be described with reference to Figs. 1 to 23.

### FIRST EXEMPLARY EMBODIMENT

### (Configuration)

As shown in Fig. 1, a content distribution system 1 according to a first exemplary embodiment is a VoD (Video on Demand) system, It should be noted that the content distribution system 1 may be an IPTV (Internet Protocol Television) system (for example, BC (Broadcast) system for broadcasting content) other than VoD, or nPVR (network Personal Video Recorder) for performing unicast distribution of prerecorded broadcast content.

The content distribution system 1 includes a plurality of user terminals (user terminal devices) 20a, 20b, ... , a connection control server 30, a transport control server 40, a service control server 50, and a media server 60. A plurality of (in this example, two) user terminals 20a and 20b, the connection control server 30, the transport control server 40, the service control server 50, and the media server 60 are connected one another communicably over a communication network 10 constituting an IP (Internet Protocol) network.

It should be noted that the connection control server 30 and the transport control server 40 constitute a connection control system. Further, the service control server 50 and the media server 60 constitute an application server system. While the content distribution system 1 includes two user terminals 20a and 20b in this example, it may include three or more user terminals.

Each of the user terminals 20a, 20b, ... includes a CPU (Central Processing Unit), storage devices (memory, HDD (Hard Disk Drive), and the like), and output devices (in this example, a display and a speaker), Each of the user terminals 20a, 20b, ... is adapted to realize functions described below by the CPU which executes programs stored in the storage devices.

Each of the user terminals 20a, 20b, ... receives content data representing content (in this example, videos formed of sounds and pictures) transmitted from the media server 60, and outputs the content based on the received content data.

Further, each of the user terminals 20a, 20b, ... stores terminal specifying information which is information for specifying the user terminal (self terminal) in a storage device, and also stores terminal identification information which is information for identifying the user terminal (self terminal) in the storage device. In this example, the terminal identification information is information representing the model (type) of the user terminal. For example, the terminal identification information may be "mobile1" or "mobile 2" indicating that the terminal is a mobile terminal, or "IPTV-STV1" or "IPTV-STV2" indicating that the terminal is a set top box.

Each of the connection control server 30, the transport control server 40, the service control server 50, and the media server 60 includes a CPU, storage devices (memory and HDD (Hard Disk Drive), and the like, not shown. Each of the servers (server devices, information processing devices) 30 to 60 are adapted to realize functions described below by the CPU which executes programs stored in the storage devices.

The connection control server 30 is adapted to control connections among a plurality of devices by receiving and transmitting a SIP message (message according to SIP (Session Initiation Protocol)). As such, the connection control server 30 is a SIP server.

When receiving a SIP message transmitted by a user terminal (hereinafter description will be given using the user terminal 20a as an example), the connection control serves 30 establishes a connection (session) among the service control server 50, the media server 60, and the user terminal 20a based on the received SIP message, in cooperation with the transport control server 40.

The service control server 50 controls a service (content data transmitting service) provided by the media serves 60. The media server 60 transmits content data representing content to the user terminal 20a with which a connection is established by the connection control serves 30,

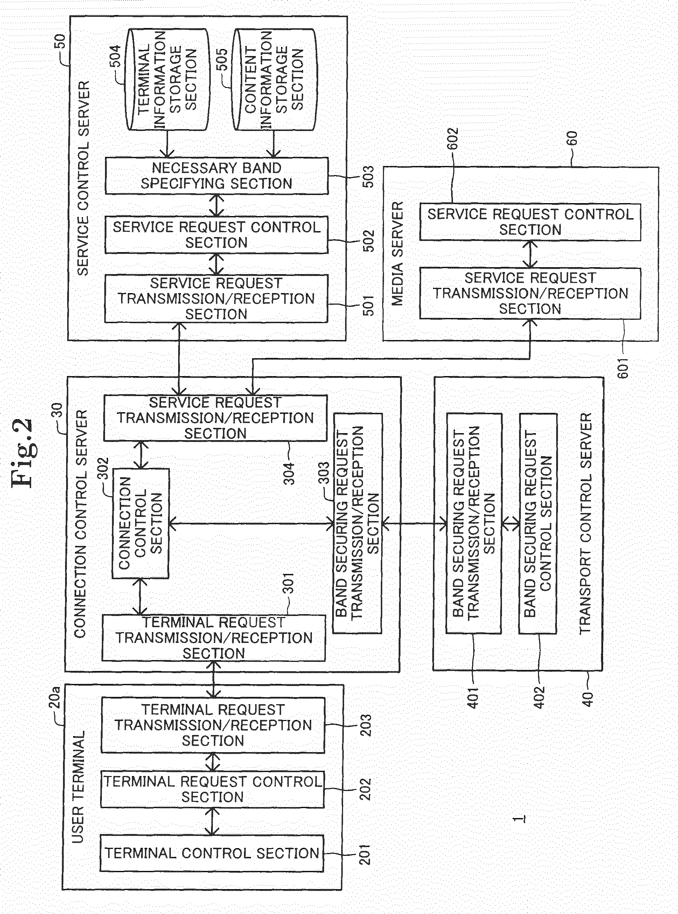

Fig. 2 is a block diagram showing functions of the content distribution system I configured as described above.

The functions of the user terminal 20a includes a terminal control section 201 a terminals request control section 202, a terminal request transmission/reception section (terminal identification information transmission means, data identification information transmission means, content transmission request transmission means) 203.

The terminal control suction 201 receives information input by the user of the user terminal 20a. Further, when the user terminal 20a receives content data from the media serves 60, the terminals control section 201 outputs content represented by the received content data,

The terminal request control section 202 generates a SIP message as a content transmission request, based on the information received by the terminal control suction 201 or information received by the user terminal 20a from another user ten-ninal 20b.

The content transmission request includes terminal identification information, data identification information, and (information representing) a communication bandwidth. The terminal identification information is information for identifying the user terminal 20a. The data identification information is information for identifying content data. The communication bandwidth is a communication bandwidth necessary for transmitting content data, identified by the data identification information, from the media server 60 to the user terminal 20a.

The terminal request transmission/reception section 203 transmits the content transmission request generated by the terminal request control section 202 to the service control server 50 via the connection control server 30.

When the terminal request control section 202 receives a redirect request transmitted by the service control server 50 in response to the content transmission request, the terminal request control section 202 generates a SIP message as a content transmission request based on the received redirect request. The redirect request is information including data identification information and a communication bandwidth. Further, the redirect information is information, instructing transmission of a content transmission request including the data identification information and the communication bandwidth included in the redirect request. Specifically, the terminal request control section 202 generates a content transmission request including the data identification information and the communication bandwidth included in the redirect request.

Further, when receiving a transmission permission notice transmitted by the media server 60 in response to the content transmission request, the terminal request control section 202 outputs the received transmission permission notice to the terminal control suction 201. The transmission permission notice is information representing that transmission of content data is permitted.

The functions of the connection control server 30 includes a terminal request transmission/reception suction 301, a connection control suction 302, a band securing request transmission/reception suction 303, and a service request transmission/reception section 304.

When the terminal request transmission/reception section 301 receives a content transmission request from the user terminal 20a, the connection control suction 302 generates a band reservation instruction which instructs to reserve a communication band between the media serves 60 and the user terminal 20a. The band reservation instruction includes the communication bandwidth included in the content transmission request, and communication bane specifying information for specifying the communication band to be reserved.

In this example, the connection control suction 302 generates communication band specifying information (Session-ID) based on the value of the header "Call-ID" of the message included in the SIP message as a content transmission request. Further, in this example, the band reservation instruction is a Diameter message (message according to Diameter which is a communication protocol). The band securing request transmission/reception suction 303 transmits the band reservation instruction generated by the connection control section 302 to the transport control server 40.

When the band securing request transmission/reception suction 303 receives a reservation processing response transmitted from the transport control server 40 in response to the band reservation instruction, the connection control suction 302 determines whether or not the reservation processing response indicates that reservation of the communication band was successful.

If the connection control section 302 determines that the reservation processing response indicates that reservation of the communication band was successful, the service request transmission/reception section 304 transmits the content transmission request received from the user terminal 20a to the service control server 50. On the other hand, if the connection control suction 302 determines that the reservation processing response indicates that reservation oaf the communication band was failed, the terminal request transmission/reception suction 301 transmits a SIP message including a predetermined error code to the user terminal 20a.

Further, when the service request transmission/reception section 304 receives a transmission permission notice (second response infon-nation) from the service control server 50. the connection control section 302 generates a band fixing instruction which instructs to fix (commit) the reserved communication band (to fix securing of the reserved communication band). The band fixing instruction includes communication band specifying information for specifying the reserved communication band, In this example, the band fixing instruction is a Diameter message. The band securing request transmission/reception suction 303 transmits the band fixing instruction generated by the connection control section 302 to the transport control serves 40.

When the band securing request transmission/reception section 303 receives fixing processing response transmitted from the transport control server 40 in response to the band fixing instruction, the connection control suction 302 determines whether or not the fixing processing response indicates that fixing of the communication band was successful.

If the connection control section 302 deten-nines that the fixing processing response indicates that fixing of the communication band was successful, the terminal request transmission/reception section 301 transmits (transfers) the transmission permission notice received from the service control server 50 to the user terminal 20a. In contrast, if the connection control suction 302 determines that the fixing processing response indicates that fixing of the communication band was failed, the terminal request transmission/reception suction 301 transmits a SIP message including a predetermined error code to the user terminal 20a. Further, in that case, in order to release the reserved communication band, the band securing request transmission/reception section 303 transmits a band release instruction, described below, to the transport control server 40.

Further, when the service request transmission/reception suction 304 receives a redirect request (first response information) from the service control server 50, the connection control section 302 generates a band release instruction which instructs to release the reserved communication band, The band release instruction includes communication band specifying information, for specifying the reserved communication band. In this example, the band release instruction is a Diameter message. The band securing request transmission/reception section 303 transmits a band release instruction generated by the connection control section 302 to the transport control server 40.

When the band securing request transmission/reception section 303 receives a release processing response transmitted from the transport control server 40 in response to the band release instruction, the connection control section 302 determines whether or not the release processing response indicates that release of the communication band was successful.

When the connection control suction 302 determines the release processing response indicates that release of the communication band was successful, the terminal request transmission/reception section 301 transmits (transfers) the redirect request received from the service control server 50 to the user terminal 20a.

The functions of the transport control server 40 include a band securing request transmission/reception section401 and a band securing request control section 402.

The band securing request control suction 402 stores used communication band information representing the reserved or fixed communication band, in a storage device. The used communication band information includes communication band specifying information and a communication bandwidth.

When the band securing request transmission/reception section 401 receives a band reservation instruction from the connection control server 30, the band securing request control section 402 performs band reservation processing to reserve a communication band which is a communication band other than the communication band represented by the stored used communication band information and has a communication bandwidth included in the band reservation instruction. As such, the band securing request control suction 402 newly stores the used communication band information representing this communication band, in the storage device.

It should be noted than even when the band securing request transmission/reception section 401 receives a band reservation instruction from the connection control server 30, if the communication band having the communication bandwidth included in the band reservation instruction has been reserved, the band securing request control section 402 does not perform band reservation processing. This means that when the connection control system receives a content transmission request from the user terminal 20a, if the communication bandwidth of the reserved communication band coincides with the communication bandwidth included in the content transmission request, the connection control system does not perform band reservation processing.

If the band reservation processing was performed successfully (that is, when the communication band is reserved), the band securing request transmission/reception section 401 transmits, to the connection control serves 30, a reservation processing response indicating that reservation of the communication band was successful. In this example, the reservation processing response is a Diameter message (message according to Diameter as a communication protocol).

On the contrary, if the band reservation processing was failed (that is, the communication band is not reserved), the band securing request transmission/reception section 401 transmits a reservation processing response indicating that reservation of the communication band was failed.

Further, when the band securing request transmission/reception section 401 receives a band fixing instruction from the connection control server 30, the band securing request control section 402 performs band fixing processing to instruct the communication relay device (for example, a router) to fix the communication band, the communication relay device constituting the communication band specified by the communication band specifying information (that is, reserved communication band) included in the band fixing instruction, of the communication band represented by the stored used communication band information, and relays communications. Thereby, the communication relay device performs preference control of packets, and the like.

If the band fixing processing was performed successfully (that is, the reserved communication band is fixed), the band securing request transmission/reception section 401 transmits, to the connection control server 30, a fixing processing response indicating that fixing of the communication band was successful. In this example, the fixing processing response is a Diameter message, On the contrary, if the band fixing processing was failed (that is, the reserved communication band is not fixed), the band securing request transmission/reception section 401 transmits, to the connection control serves 30, a fixing processing response indicating that fixing of the communication band was failed.

Further, when the band securing request transmission/reception section 401 receives a band release instruction from the connection control server 30, the band securing request control section 402 performs band release processing to release the communication band specified by the communication band specifying information (that is, reserved communication band) in the band release instruction, of the communication band represented by the stored used communication band information, This means that the band securing request control section 402 deletes the used communication band information representing this communication band from the storage device,

If the band release processing was performed successfully (that is, if the reserved communication band is the band securing request transmission/reception section 401 transmits, to the connection control serves 30, a release processing response indicating that release of the communication band was successful, In this example, the release processing response is a Diameter message. On the contrary, if the band release processing was failed (that is, if the reserved communication band is not released), the band securing request transmission/reception section 401 transmits, to the connection control server 30, a release processing response indicating that release of the communication band was failed.

The functions of the service control server 50 includes a service request transmission/reception section (terminal identification information reception means, data identification information reception and pat of response information transmission means) 501, a service request control section 502, a necessary band specifying section (terminal attribute information acquisition means, data selection means) 503, a terminal information storage section (terminal information storage meons) 504, and a content information storage section 505. It should be noted that an external device adapted to be communicable with the service control server 50 may include the terminal information storage section 504 and the content information storage section 505.

The service request transmission/reception suction 501 receives a sip message as a content transmission request transmitted by the user terminal 20a, The content transmission request includes terminal identification information, data identification information, and a communication bandwidth.

When the service request transmission/reception section 501 receives a SIP message as a content transmission request, the service request control suction 502 acquires the terminal identification information, the data identification information, and the communication bandwidth include in the received content transmission request.

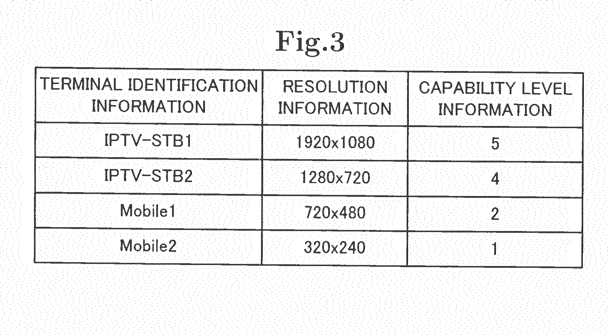

As shown in Fig. 3, the terminal information storage section 504 stores, in advance, terminal identification information and terminal attribute information in association with each other. In this example, the terminal attribute information includes resolution information representing the resolution of the display included in the user terminal 20a and the capability level information representing the capability level of the user terminal 20a.

In this example, the capability level of the user terminal 20a is a value which becomes larger as the information, processing capability of the CPU included in the user terminal 20a is higher, which becomes larger as the number of forms of content data that the user terminal 20a is able to output increases, and which becomes larger as the storage capacity of the storage device included in the user terminal 20a increases. In this example, the capability level information, is information representing the levels in five stages from "1" to "5".

As such, it can be said that the terminal attribute information is information indicating the capability of the user terminal 20a, which is the capability that the user terminal 20a outputs content based on content data representing the content.

For example, the terminal information storage section 504 stores "Mobile1" as terminal identification information, "720*480" as resolution information representing the horizontal resolution of "720" and the vertical resolution of "480", and "2" as capability level information, in association with one another.

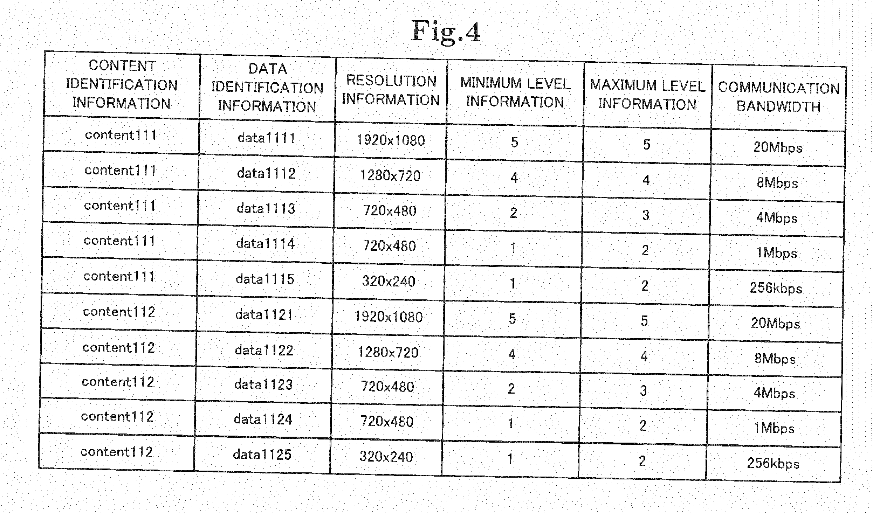

As shown in Fig. 4, the content information storage suction 505 stores, in advance, content identification information, data identification information, resolution information, minimum level information, maximum level information, and communication bandwidths, in association with one another.

The content identification information is information for identifying content. The data identification information is information for identifying content data representing content (in this example, data generated by encoding content).

The resolution information is information representing the resolution of content. The minimum level information is information representing the minimum value of the capability level of a user terminal necessary for outputting content. The maximum level information is information representing the maximum value of the capability level of a user terminal necessary for outputting content. The communication bandwidth is information representing a communication bandwidth necessary for transmitting content data from the media server 60 to a user terminal.

For example, the content information storage section 505 stores "content111" as content identification information, "data1113" as data identification information, "720*480" as resolution information representing "720" as the horizontal resolution and "480" as the vertical resolution, "2" as minimum level information, "3" as maximum level information, and "4Mbps" as a communication bandwidth, in association with one another.

The necessary band specifying section 503 acquires terminal attribute information stored in the terminal information storage section 504 in association with the terminal identification information acquired by the service request control section 502. The necessary band specifying section 503 selects content data based on the acquired terminal attribute information and the data identification information acquired by the service request control section 502. At this time, the necessary band specifying section 503 selects content data representing content same as the content represented by the content data identified by the data identification information.

Specifically, the necessary band specifying section 503 first acquires content identification information stored in association with the data identification information acquired by the service request control section 502 (that is, included in the content transmission request).

Then, the necessary band specifying section 503 acquires data identification information, stored in the content information storage section 505 in association with the acquired content identification information, the resolution information included in the acquired terminal attribute information, minimum level information representing a value not larger than the capability level information included in the acquired terminal attribute information, and maximum level information representing a value not smaller than the capability level information included in the acquired terminal attribute information, to thereby select content data identified by the data identification information.

For example, when a content transmission request including "data1111" as data identification information and "Mobile1 as terminal identification information is received, the necessary band specifying section 503 acquires "data 1113" or "data 1114" as data identification information. In this example, the necessary band specifying section 503 is adapted to select data identification information associated with the largest communication bandwidth, if a plurality of items of data identification information are acquired. Thereby, it is possible to select content data of the highest possible quality (picture quality and/or sound quality). Accordingly, the necessary band specifying section 503 selects content data identified by "data1113 as data identification information.

The service request control suction 502 determines whether or not the data identification information for identifying the content data selected by the necessary band specifying section 503 and the data identification information included in the received content transmission request coincide with each other.

Then, if the service request control section 502 determines that the data identification information, for identifying the content data selected by the necessary band specifying suction 503 and the data identification information included in the received content transmission request differ from each other, the service request control section 502 generates a SIP message as redirect request. The redirect request includes data identification information for identifying the content data selected by the necessary band specifying section 503, and a communication bandwidth, necessary for transmitting the content data from the media server 60 to the user terminal 20a.

The service request transmission/reception suction 501 transmits the redirect request (redirect response) generated by the service request control suction 502 to the connection control server 30.

On the contrary, if the service control section 502 determines that the data identification information for identifying the content data selected by the necessary band specifying section 503 and the data identification information included in the received content transmission request coincide with each other, the service request transmission/reception section 501 transmits (transfers) the received content transmission request to the media server 60 via the connection control server 30.

The functions of the media serves 60 includes a service request transmission/reception section (part of response information transmission means) 601 and a service request control section 602.

When the service request transmission/reception suction 601 receives the content transmission request, the service request control suction 602 generates a SIP message as a transmission permission notice.
The service request transmission/reception section 601 transmits the transmission permission notice generated by the service request control section 602 to the service control server 50 via the connection control server 30.

Further, when the service request transmission/reception section 501 of the service control server 50 receives the SIP message as a transmission permission notice from the media server 60, the service request transmission/reception section 501 transmits (transfers) the received transmission permission notice to the connection control server 30.

In this way, it can be said that when a content transmission request is received, if the data identification information included in the received content transmission request and the data identification information for identifying the content data selected based on the content transmission request coincide with each other, the application server system transmits a transmission permission notice as second response information to the connection control system.

Further, the media server 60 has a function of transmitting, to the user terminal 20a, content data identified by the data identification information included in the content transmission serving as the basis for transmitting the transmission permission notice (content transmission means), using the connection established by the connection control.

### (Operation)

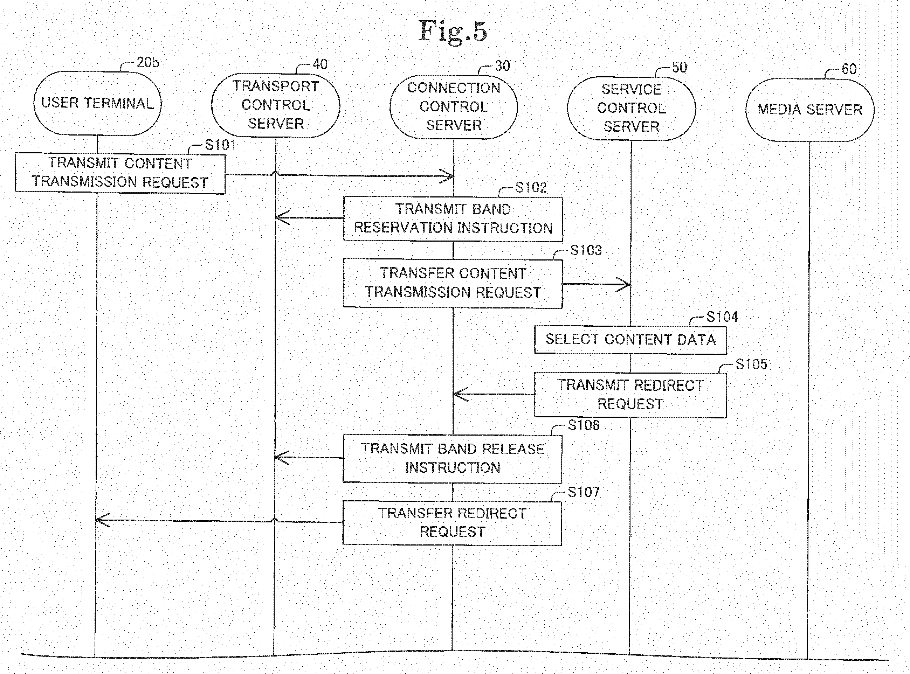

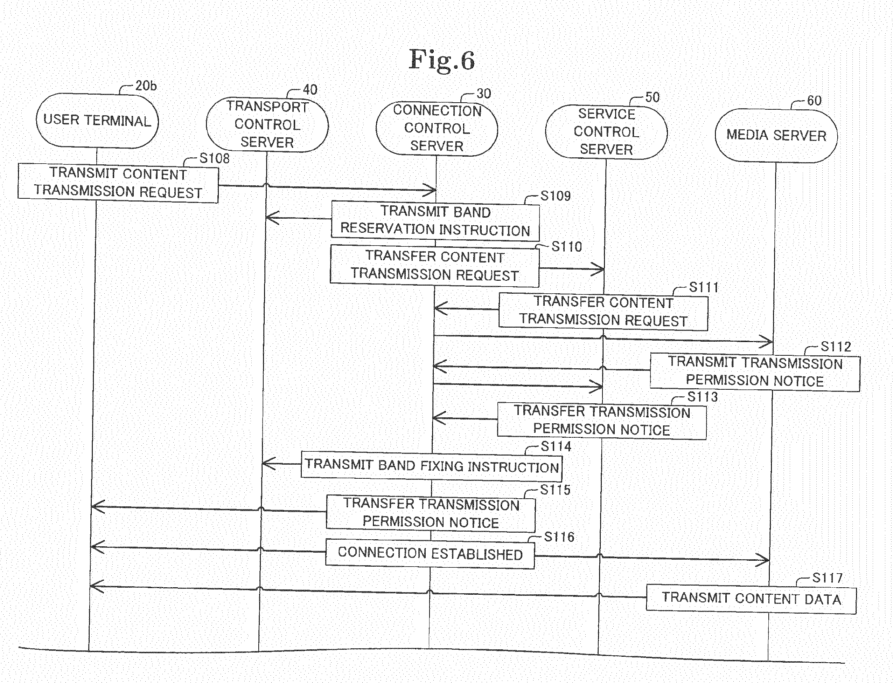

Next, operation, according to the present invention, of the content distribution system 1 configured as described above will be described with reference to the sequence charts of Figs. 5 and 6.

First, it is assumed that the user terminal 20a receives content data identified by "data1111 as data identification information from the media server 60, and outputs content represented by the received content data. In this example, it is assumed that terminal identification information for identifying the user terminal 20a is "IPTV-STB1".

In this case, it is assumed that a user of the user terminal 20a wishes to view content continuously using a user terminal 20b. In this example, it is assumed that the terminal identification information for identifying the user terminal 20b is "Mobilel".

In this example, the user terminal 20a transmits "data1111" as data identification information and "20Mbps" as a communication bandwidth to the user terminal 20b via wireless communication (infrared communication, Bluetooth (Registered Trademark), or the like), in accordance with a transfer instruction input by the user. It should be noted that the user terminal 20a may be adapted to transmit the data identification information and the communication bandwidth to the user terminal 20b via a portal server.

When the user terminal 20b receives the data identification information and the communication bandwidth from the user terminal 20a, the terminal request control section 202 of the user terminal 20b generates a SIP message as a content transmission request including the received data identification information and the communication bandwidth. Then, the ternimal request transmission/reception section 203 transimits the generated SIP message to the connection control server 30 (step S101 in Fig. 5).

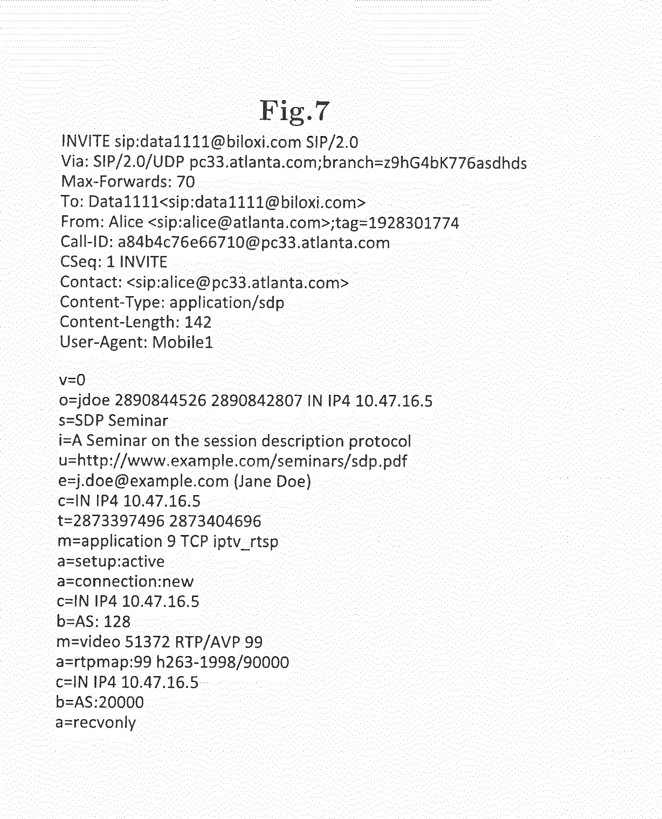

Fig. 7 shows an example of a SIP message as a content transmission request. In this example, the content transmission request is transmitted as an INVITE message (message in which "INVITE" is set as a method) of a SIP message. In this example, the value of "Request-URI" is "data1111", the value of "User-Agent" is "Mobile1" as terminal identification information, and the value of an attribute "AS" of the value of the type "b" in SDP (Session Description Protocol) is "20Mbps" as a communication, bandwidth.

When the terminal request transmission/reception section 301 receives the content transmission request from the user terminal 20b, the connection control section 302 of the connection control server 30 generates a band reservation instruction which instructs to reserve a communication band between the media server 60 and the user terminal 20b. The band reservation instruction includes the communication bandwidth included in the content transmission request and the communication band specifying information, for specifying the communication band to be reserved. The band securing request transmission/reception section 303 transmits the band reservation instruction generated by the connection control section 302 to the transport control server 40 (step S102 in Fig. 5).

When the band securing request transmission/reception section 401 receives the band reservation instruction from the connection control server 30, the band securing request control section 402 of the transport control server 40 performs band reservation processing to reserve a communication band which is other than the communication band represented by the stored used communication band information and which is included in the band reservation instruction. Then, the band securing request transmission/reception section 401 transmits, to the connection control server 30, a reservation processing response indicating that reservation of the communication band was successful.

When the band securing request transmission/reception section 303 receives, from the transport control server 40, the reservation processing response indicating that reservation of the communication band was successful, the service request transmission/reception section 304 transfers the content transmission request received from the user terminal 20b to the service control serves 50 (step S103 in Fig. 5).

When the service request transmission/reception suction 501 receives the content transmission request, the service request control section 502 of the service control server 50 acquires the terminal identification information, the data identification information, and the communication bandwidth included in the received content transmission request. In this example, the service request control section 502 acquires "Mobile1 as the terminal identification information, "data1111" as the data identification information, and "20Mbps" as the communication bandwidth.

Then, the necessary band specifying suction 503 of the service control server 50 acquires the terminal attribute information stored in the terminal information storage section 504 in association with the terminal identification information acquired by the service request control section 502. In this example, the necessary band specifying section 503 acquires "720*480" as resolution information representing the horizontal resolution of "720" and the vertical resolution of "480", ann "2" as capability level information,

Further, the necessary band specifying section 503 acquires content identification information stored in association with the data identification information acquired by the service request control section 502 (that is, included in the content transmission request).

Then, the necessary band specifying suction 503 acquires data identification information, stored in the content information storage section 505 in association with the acquired content identification information, the resolution information included in the acquired terminal attribute information, the minimum level information representing a value not larger than the capability level information included in the acquired terminal attribute information, and the maximum level information representing a value not smaller than the capability level information included in the acquired terminal attribute information. At this time, if a plurality of items of identification information are acquired, the necessary band specifying section 503 acquires data identification information associated with the largest communication bandwidth to thereby select content data (step S104 in Fig. 5).

In this example, the necessary band specifying section 503 acquires "data1113" as data identification information, As such, the data identification information for identifying the content data selected by the necessary band specifying section 503 and the data identification information included in the received content transmission request differ from each other.

Accordingly, the service request control suction 502 generates a SIP message as a redirect request including the acquired data identification information and the communication bandwidth stored in the content information storage section 505 in association with the data identification information. Then, the service request transmission/reception section 501 transmits the generated redirect request to the connection control server 30 (step S105 in Fig. 5).

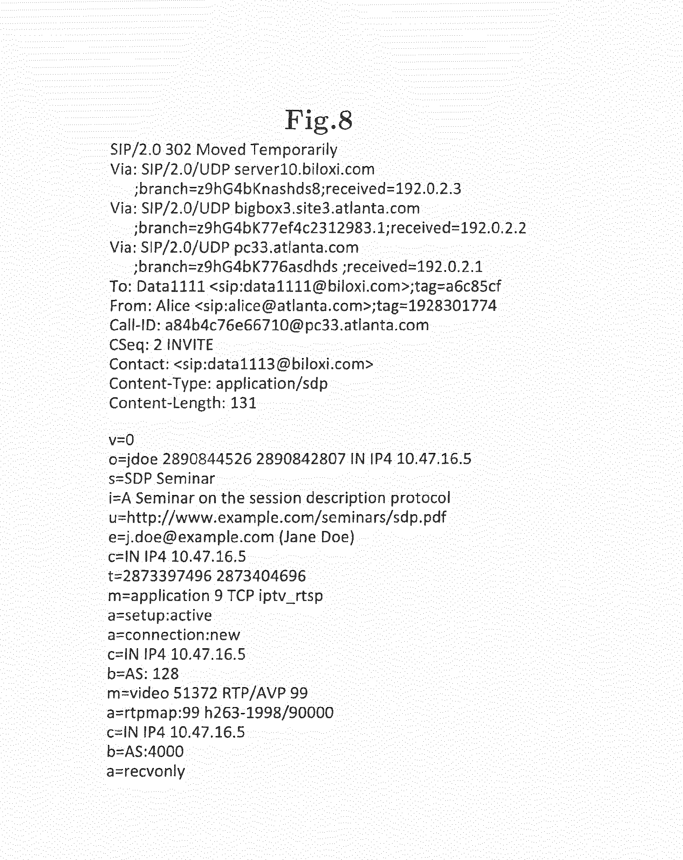

Fig. 8 shows an example of a SIP message as a redirect request. In this example, the redirect request includes "302 Moved Temporarily" instructing transmission of a content transmission request in response to the redirect request. Further, in this example, the value of "Contact" is "data1113" as data identification information, and the value of an attribute "AS" of the value of the type "b" in SDP is "4Mbps" as a communication bandwidth.

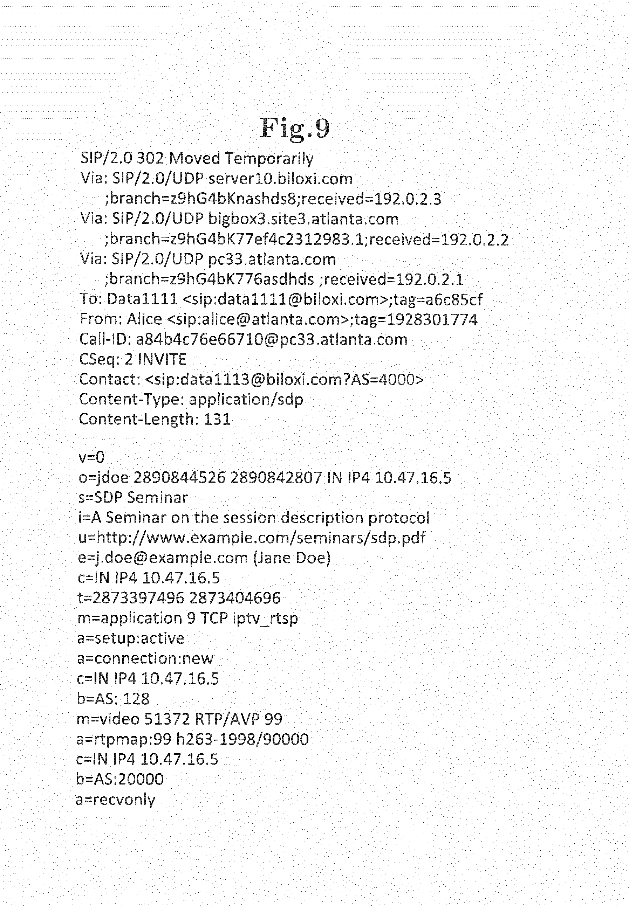

Fig. 9 shows another example of a SIP message as a redirect request. In this example, the value of "Contact" includes "data1113" as data identification information and "4Mbps" as a communication bandwidth.

When the service request transmission/reception suction 304 receives the redirect request from the service control serves 50, the connection control section 302 of the connection control server 30 generates a band release instruction which instructs to release the reserved communication band. Then, the band securing request transmission/reception section 303 transmits the generated band release instruction to the transport control server 40 (step S106 in Fig. 5).

When the band securing request transmission/reception section 401 receives the band release instruction from the connection control server 30, the band securing request control section 402 of the transport control server 40 performs band release processing to release the communication band specified by the communication band specifying information (that is, reserved communication band) included in the band release instruction, of the communication band represented by the stored used communication band information. Then, the band securing request transmission/reception suction 40 transmits a release processing response indicating that release of the communication band was successful, to the connection control server 30.

Then, when the band securing request transmission/reception section 303 receives the release processing response indicating that release of the communication band was successful, the terminal request transmission/reception suction 301 transfers the redirect request received from the service control server 50, to the user terminal 20b (step S107 in Fig. 5).

When the terminal request control section 202 of the user terminal 20b receives the redirect request transmitted by the service control server 50, the terminal request control section 202 generates a SIP message as a content transmission request including the data identification information and the communication bandwidth included in the received redirect request. Then, the terminal request transmission/reception section 203 transmits the generated content transmission request to the connection control serves 30 (step S108 in Fig. 6).

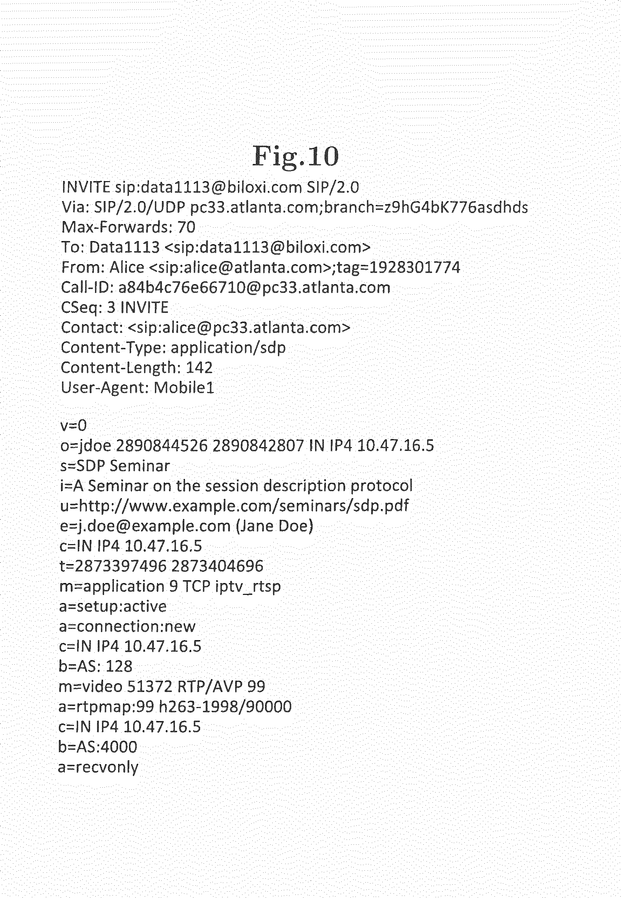

Fig. 10 shows an example of a SIP message as the content transmission request. In this example, the value of "Request-URI" is "data1113", and the value of the attribute "AS" of the value of the type "b" in SIP is "4Mbps" as a communication bandwidth.

When the terminal request transmission/reception section 301 receives the content transmission request from the user terminal 20b, the connection control section 302 of the connection control server 30 generates a band reservation instruction, as in the above-described case. The band securing request transmission/reception suction 303 transmits the band reservation instruction generated by the connection control suction 302 to the transport control server 40 (step S109 in Fig. 6).

When the band securing request transmission/reception section 401 receiver the band reservation instruction from the connection control server 30, the band securing request control section 402 of the transport control serves 40 performs band reservation processing, a in the above-described case. Then, the band securing request transmission/reception suction 401 transmits a reservation processing response indicating that reservation of the communication band was successful, to the connection control serves 30.

When the band securing request transmission/reception suction 303 receives, from the transport control server 40, the reservation processing response indicating that reservation of the communication band was successful, the service request transmission/reception suction 304 transfers the content transmission request received from the user terminal 20b to the service control server 50 (step S110 in Fig. 6).

When the service request transmission/reception section 501 receive the content transmission request, the service request control suction 502 of the service control server 50 acquires the terminal identification information, the data identification information, and the communication bandwidth included in the received content transmission request. In this example, the service request control suction 502 acquires "Mobile1 as the terminal identification information, "data1113" as the data identification information, and "4Mbp" as the communication bandwidth.

Then, the necessary band specifying section 503 of the service control server 50 selects content data based on the content transmission request received by the service request transmission/reception suction 501, as in the above-described case. In this example, the necessary band specifying section 503 selects content data identified by "data111" as the data identification information. As such, the data identification information for identifying the content data selected by the necessary band specifying section 503 and the data identification information included in the received content transmission request coincide with each other.

Accordingly, the service request transmission/reception section 501 transfers the content transmission request received from the connection control server 30 to the media serves 60 via the connection control server 30 (step S111 in Fig. 6).

When the service request transmission/reception section 601 receives the content transmission request, the service request control section 602 of the media server 60 generates a SIP message as a transmission permission notice. Then, the service request transmission/reception section 601 transmits the generated transmission permission notice to the service control server 50 via the connection control server 30 (step S112 in Fig. 6).

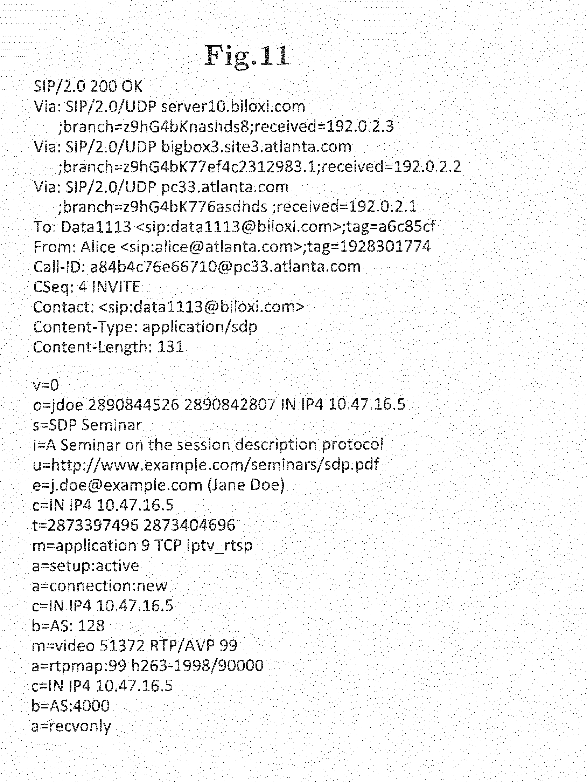

Fig. 11 shows an example of a SIP message as the transmission permission notice. In this example, the transmission permission notice is transmitted as an OK message (response including "200" as a status code and "OK" in the start line) of the SIP message.

Then, when the service request transmission/reception section 501 of the service control serves 50 receives the SIP message as a transmission permission notice from the media server 60, the service request transmission/reception section 501 transfers the received transmission permission notice to the connection control server 30 (step S113 in Fig. 6).

Further, when the service request transmission/reception section 304 receives the transmission permission notice from the service control server 50, the connection control section 302 of the connection control server 30 generates a band fixing instruction which instructs to fix (commit) the reserved communication band. The band fixing instruction includes communication band specifying information for specifying the reserved communication band. The band securing request transmission/reception suction 303 transmits the generated band fixing instruction to the transport control server 40 (step S114 in Fig. 6).

Then, when the band securing request transmission/reception section 401 receives the band fixing instruction from the connection control serves 30, the band securing request control suction 402 of the transport control server 40 performs band fixing processing to instruct a communication relay device (for example, a router) which constitutes the communication band specified by the communication band specifying information (that is, reserved communication band) included in the band fixing instruction, of the communication band represented by the stored used communication band information, and relays communication, to fix the communication band. Thereby, the communication relay device performs preference control of packets, and the like. Then, the band securing request transmission/reception section 401 transmits a fixing processing response indicating that fixing of the communication band was successful, to the connection control server 30.

When the band securing request transmission/reception section 303 receives the fixing processing response indicating that securing of the communication band was successful, the terminal request transmission/reception suction 301 of the communication control serves 30 transfers the transmission permission notice received from the service control serves 50 to the user terminal 20b (step S115 in Fig. 6).

Then, when the user terminal 20b receives the transmission permission notice from the connection control serves 30, the user terminal 20b transmits a connection preparation completion notice to the media server 60 via the connection control serves 30 and the service control server 50. In this example, the connection preparation completion notice is transmitted as an ACK message (message in which "ACK" is set as a method) of a SIP message.

Thereby, a connection between the user terminal 20b and the media server 60, having a communication bandwidth ("4Mbps" in this example) necessary for transmitting content data selected by the service control server 50 from the media server 60 to the user terminal 20b, is established (step S116 in Fig. 6).

Then, the media server 60 transmits the content data (in this example, content data identified by "data1113" as data identification information) selected by the service control server 50, to the user terminal 20b using the established connection (step S117 in Fig. 6).

In this way, the user is able to continuously view the content (in this example, content identified by "content1111" as content identification information), which has been viewed using the user terminal 20a, with use of the user terminal 20b. At this time, the content data transmitted from the media server 60 is selected appropriately in accordance with the capability of the user terminal which receives the content data. Further, a communication band having a communication bandwidth necessary for transmitting the content data from the media server 60 to the user terminal is secured appropriately.

As described above, according to the first exemplary embodiment of the content distribution system of the present invention, it is possible to prevent the media server 60 (application server system) from transmitting content data that the user terminal 20b cannot output (is incapable of outputting), to the user terminal 20b. Consequently, the user terminal 20b is able to output content reliably based on the received content data.

Accordingly, even in the case where a user wishes to continuously view content, which has been viewed using a first user terminal (user terminal 20a), using a second user terminal (user terminal 20b) and where the terminal attribute information (for example, the display resolution of the user terminal, the information processing capability of the user terminal, and the like) of the first user terminal and the terminal attribute information of the second user terminal are different, the user is able to view the content continuously using the second user terminal.

Further, according to the above-described configuration, a connection having a communication bandwidth necessary for transmitting content data from the media server 60 to the user terminal 20b is established in advance, and with use of the connection, the content data is transmitted. Accordingly, it is possible to reliably prevent deterioration of the communication quality when the content data is transmitted.

As described above, according to the content distribution system, 1, it is possible to prevent deterioration of the communication quality when the content data is transmitted to the user terminal 20b and also possible to prevent transmission of content data that the user terminal 20b is incapable of outputting, to the user terminal 20b.

In addition, in the first exemplary embodiment, the content distribution system 1 is adapted such that the user terminals 20a, 20b, ··· transmits a content transmission request by allowing the request to include terminal identification information, and that the service control server 50 acquires terminal attribute information, based on the terminal identification information.

As such, according to the above-described configuration, the quantity of information transmitted from the user terminals 20a, 20b, ··· to the service control server 50 can be reduced compared with the case where the user terminals 20a, 20b, ··· transmit terminal attribute information to the service control server 50. As a result, it is possible to reduce the communication load between the user terminals 20a, 20b, ··· and the service control server 50.

Further, in the first exemplary embodiment, the service control server 50 is adapted to select content data representing content which is the same as the content represented by the content data identified by the received data identification information. According to this configuration, it is possible to transmit content data, in which the user terminal 20b to be used by the user is capable of outputting the content, of the content data representing the content that the user wishes to view, to the user terminal 20b. As a result, the user is able to view the content the user wishes tao view in a reliable manner.

In addition, in the first exemplary embodiment, the connection control system is adapted to, when receiving a content transmission request from the user terminals 20a, 20b, ···, perform band reservation processing to reserve a communication band between the media server 60 and the user terminals 20a, 20b, ···.

According to this configuration, as a communication band is reserved at the point of time when the content transmission request is received by the connection control system, it is possible to prevent a shortage of a communication bandwidth when the connection is actually established.

Further, in the first exemplary embodiment, the connection control system is adapted to, when receiving a redirect request (first response information) from the service control server 50, release the reserved communication band. According to this configuration, it is possible to prevent a state of reserving a communication from being maintained needlessly. As a result, it is possible to prevent an available communication bandwidth from being narrowed needlessly.

It should be noted the necessary band specifying section (available band information acquisition means) 503 of the service control server 50 according to a first exemplary variation of the first exemplary embodiment is adapted to acquire available band information representing a communication bandwidth which can be used between the media server 60 and the user terminals 20a, 20b, ···.

Specifically, the necessary band specifying section 503 transmits an available band transmission request for requesting transmission of available band information, to the transport control server 40 via the connection control server 30.
When the transport control server 40 receives the available band transmission request, the transport control server 40 transmits the available band information to the service control server 50 via the connection control serves 30.

Further, the necessary band specifying section 503 acquires the available band information received by the service request transmission/reception suction 501. The necessary band specifying section 503 selects content data based on the acquired available band information and the received content transmission request. Specifically, the necessary band specifying section 503 selects content data associated with a communication bandwidth not larger than the communication bandwidth represented by the available band information (available communication bandwidth).

According to the first exemplary variation, the service control server 50 is able to select content data according to the available communication bandwidth. As such, if the available communication bandwidth is relatively small, the service control server 50 can select content data having a smaller bit rate, while if the available communication bandwidth is relatively large, the service control serves 50 can select content data having a larger bit rate. As a result, it is possible to prevent a case where content data is not able to be transmitted due to the shortage of the communication bandwidth.

Further, in a second exemplary variation of the first exemplary embodiment, the necessary band specifying section (load information acquisition means) 503 of the service control server 50 is adapted to acquire processing load information representing the processing load of the media server 60. In this example, the processing load information, represents CPU availability (CPU utilization) which is a proportion of an actual value to an upper limit value of the number of computation executed by the CPU per unit time. It should be noted that the processing load information may be information representing the quantity of data stored in the memory (used capacity of the memory) or utilization of the memory which is a proportion of the "quantity of stored data" to the "total capacity" of the memory.

Specifically, the necessary band specifying section 503 transmits a processing load transmission request for requesting transmission of processing load information, to the media server 60 via the connection control serves 30.
When the media server 60 receives the processing load transmission request, the media server 60 transmits processing load information to the service control server 50 via the connection control server 30.

Further, the necessary band specifying suction 503 acquires the processing load information received by the service request transmission/reception section 501. The necessary band specifying section 503 selects content data based on the acquired processing load information and the received content transmission request. Specifically, the necessary band specifying section 503 selects content data associated with a communication bandwidth not larger than the communication bandwidth preset according to the processing load represented by the processing load information.

According to the second exemplary variation, the service control server 50 is able to select content data according to the processing load of the media serves 60. As such, if the processing load is relatively large, the service control server 50 can select content data having a smaller bit rate, while if the processing load is relatively small, the service control server 50 can select content data having a larger bit rate. As a result, it is possible to prevent a case where content data cannot be transmitted because of an excessive large processing load being applied to the media serves 60.

Further, another exemplary variation of the first exemplary embodiment may includes a server having both functions of the service control server 50 and the media server 60, instead of the service control server 50 and the media serves 60.

### SECOND EXEMPLARY EMBODIMENT

Next, a content distribution system according to a second exemplary embodiment of the present invention will be described. The content distribution system of the second exemplary embodiment is different from the content distribution system of the first exemplary embodiment in that the media server 60 is adapted to select content data suitable for a user terminal. Accordingly, description will be given below focusing on such a difference.

### (Configuration)

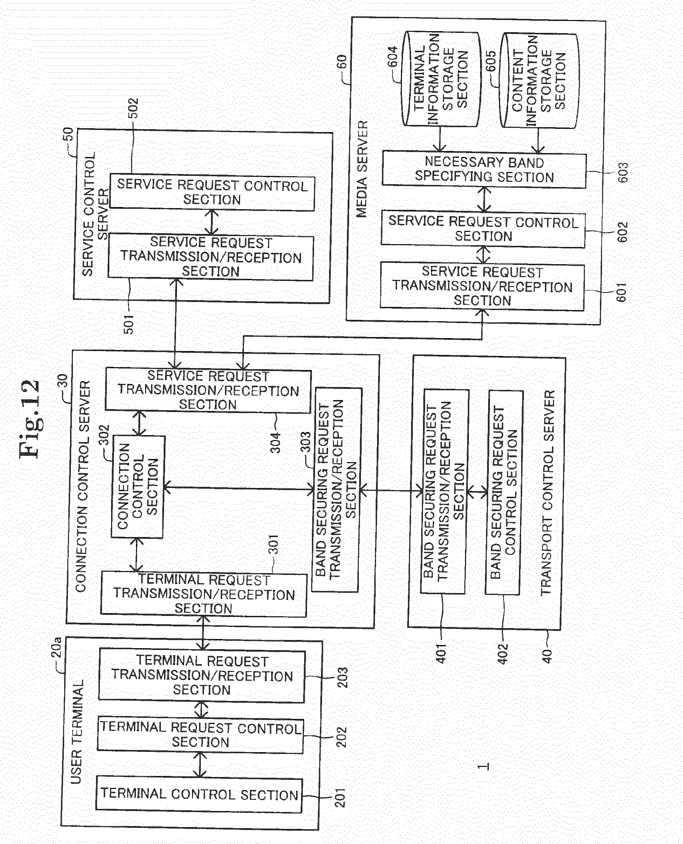

As shown in Fig. 12, the functions of the service control server 50 according to the second exemplary embodiment do not include the necessary band specifying suction 503, the terminal information storage section 504, and the content information storage suction 505, which is different from the service control server 50 of the first exemplary embodiment. Meanwhile, the functions of the service control server 50 includes the service request transmission/reception section 501 and the service request control suction 502, as in the service control server 50 of the first exemplary embodiment.

When the service transmission/reception section 501 receives a SIP message as a content transmission request transmitted by the user terminals 20a, 20b, ···, the service request transmission/reception section 501 transmits (transfers) the received content transmission request to the media server 60. Further, when receiving a SIP message as a redirect request or a transmission permission notice transmitted by the media server 60, the service request transmission/reception section 501 transmits (transfers) the received redirect request or transmission permission notice to the connection control serves 30.

Similar to the media serves 60 of the first exemplary embodiment, the functions of the media server 60 of the second exemplary embodiment include a service request transmission/reception section 601 and a service request control section 602. The functions of the media server 60 also include a necessary band specifying suction 603, a terminal information storage suction 604, and a content information storage suction 605, unlike the media server 60 of the first exemplary embodiment. It should be noted that an external device configured communicably with the media server 60 may include the terminal information storage suction 604 and the content information storage section 605.

The service request transmission/reception section 601 receives a SIP message as a content transmission request transmitted by the user terminals 20a, 20b, ···. The content transmission request includes terminal identification information, data identification information, and a communication bandwidth.

When the service request transmission/reception section 60 receives a SIP message as a content transmission request, the service request control section 602 acquires the terminal identification information, the data identification information, and the communication bandwidth, included in the received content transmission request.

The terminal information storage section 604 has functions similar to those of the terminal information storage section 504 of the first exemplary embodiment. The content information storage section 605 has functions similar to those of the content information storage section 505 of the first exemplary embodiment.

The necessary band specifying section 603 has functions similar to those of the necessary band specifying section 503 of the first exemplary embodiment. As such, the necessary band specifying section 603 acquires terminal attribute information stored in the terminal information storage section 604 in association with the terminal identification information acquired by the service request control suction 602. Further, the necessary band specifying suction 603 selects content data based on the acquired terminal attribute information and the data identification information acquired by the service request control suction 602.

The service request control section 602 determines whether the data identification information for identifying the content data selected by the necessary band specifying section 603 and the data identification information included in the received content transmission request coincide with each other.

Then, if the service request control section 602 determines that the data identification information for identifying the content data selected by the necessary band specifying section 603 and the data identification information included in the received content transmission request differ from each other, the service request control suction 602 generates a SIP message as a redirect request. The redirect request includes data identification information for identifying the content data selected by the necessary band specifying section 603 and a communication bandwidth necessary for transmitting the content data from the media server 60 to the user terminals 20a, 20b,

The service request transmission/reception section 601 transmits the redirect request (redirect response) generated by the service request control section 602 to the service control server 50 via the connection control server 30.

On the other hand, if the service request control suction 602 determines that the data identification information for identifying the content data selected by the necessary band specifying section 603 and the data identification information included in the received content transmission request coincide with each other, the service request control suction 602 generates a SIP message as a transmission permission notice. The service transmission/reception section 601 transmits the transmission permission notice generated by the service request control section 602 to the service control serves 50 via the connection control server 30.

### (Operation)

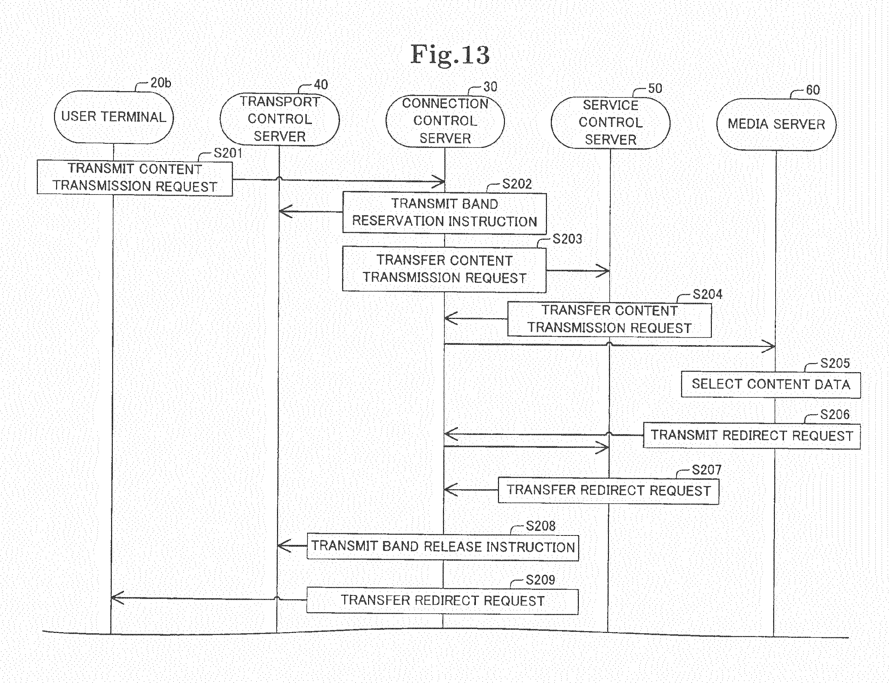

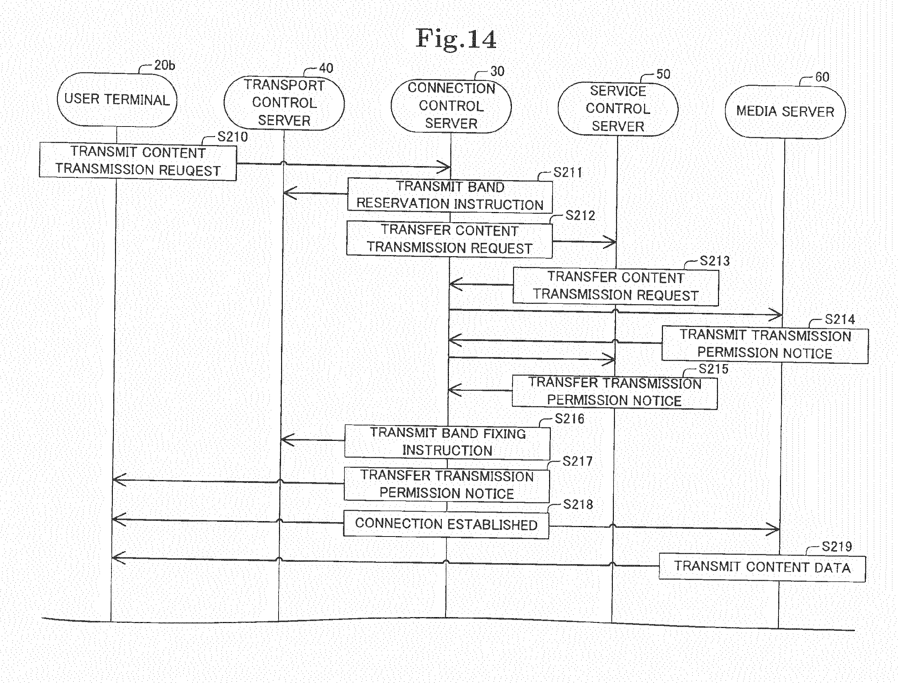

Next, operation of the content distribution system 1 configured as described above will be described with reference to the sequence charts of Figs. 13 and 14. It should be noted that in this example, the same situation as that of the operation of the first exemplary embodiment is assumed. Accordingly, description will be given focusing on the point which is different from the operation of the content distribution system 1 according to the first exemplary embodiment, of the operation of the content distribution system 1 according to the second exemplary embodiment.

Similar to step S101 in Fig 5, the user terminal 20b transmits a content transmission request to the connection control server 30 (step S201 in Fig. 3). Thereby, similar to step S 102 in Fig. 5, the connection control server 30 transmits a band reservation instruction to the transport control server 40 (step S202 in Fig. 13). As a result, the transport control server 40 performs band reservation processing. Then, similar to step S103 of Fig. 5, the connection control server 30 transfers the content transmission request to the service control server 50 (step S203 in Fig. 13).

When the service transmission/reception section 501 of the service control server 50 receives the SIP message as a content transmission request, transmitted by the user terminal 20b, from the connection control serves 30, the service request transmission/reception section 501 transfers the received content transmission request to the media server 60 via the connection control server 30.

When the service request transmission/reception section 601 receives the content transmission request, the service request control suction 602 of the media server 60 acquires the terminal identification information, the data identification information, and the communication bandwidth, included in the received content transmission request. In this example, the service request control section 602 acquires "Mobile1" as the terminal identification information, "data1111" as the data identification information, and "20Mbps" as the communication bandwidth.

Then, the necessary band specifying section 603 of the media server 60 acquires terminal attribute information stored in the terminal information storage section 604 in association with the terminal identification information acquired by the service request control suction 602. In this example, the necessary band specifying section 603 acquires "720*480" as resolution information representing the horizontal resolution of "720" and the vertical resolution of "480, and "2" as capability level information.

Further, the necessary band specifying section 603 acquires content identification information stored in association with the data identification information acquired by the service request control suction 602 (that is, included in the content transmission request).

Then, the necessary band specifying suction 603 acquires data identification information stored in the content information storage section 605 in association with the acquired content identification information, the resolution information included in the acquired terminal attribute information, the minimum level information representing the value not larger than the capability level information included in the acquired terminal attribute information, and the maximum level information representing the value not smaller than the capability level information included in the acquired terminal attribute information. At this time, if a plurality of items of data identification information are acquired, the necessary band specifying section 603 selects content data bey acquiring data identification information associated with the largest communication bandwidth (step S205 in Fig. 5).

In this example, the necessary band specifying section 603 acquires "data1113" as the data identification information. As such, the data identification information for identifying the content data selected by the necessary band specifying section 603 and the data identification information included in the received content transmission request differ from each other.

Accordingly, the service request control section 602 generates a SIP message as a redirect request including the acquired data identification information and the communication bandwidth stored in the content information storage suction 605 in association with the data identification information. Then, the service request transmission/reception section 601 transmits the generated redirect request to the service control server 50 via the connection control server 30 (step S206 in Fig 13).

When the service request transmission/reception section 501 of the service control server 50 receives the SIP message as the redirect request transmitted by the media server 60, the service request transmission/reception section 50 transfers the received redirect request to the connection control server 30 (step S207 in Fig. 13).

When the connection control server 30 receives the redirect request from the service control server 50, the connection control server 30 transmits a band release instruction to the transport control server 40, similar to step S106 in Fig. 5 (step S208 in Fig, 13). As a result, the transport control server 40 performs band release processing. Then, similar to step S107 in Fig. 5, the connection control server 30 transfers the redirect request to the user terminal 20b (stop S209 in Fig.13).

Similar to step S108 in Fig. 6, when the user terminal 20b receives the redirect request transmitted from the media server 60, the user terminal 20b generates a content transmission request based on the received redirect request, and transmits the generated content transmission request (step S210 in Fig. 14).

Thereby, the connection control server 30 transmits a band reservation instruction to the transport control server 40, similar to step S 109 in Fig. 6 (step S211 in Fig. 14). As a result, the transport control server 40 performs band reservation processing. Then, similar to step S110 in Fig. 6, the connection control server 30 transfers the content transmission request to the service control server 50 (step S212 in Fig. 14).

When the service request transmission/reception section 501 of the service control server 50 receives, from the connection control server 30, the SIP message as a content transmission request transmitted by the user terminal 20b, the service request transmission/reception section 501 transfers the received content transmission request to the media server 60 via the connection control server 30 (step S213 in Fig. 14).

When the service request transmission/reception section 601 receives the content transmission request, the service request control section 602 of the media server 60 acquires the terminal identification information, the data identification information, and the communication bandwidth, included in the received content transmission request. In this example, the service request control section 602 acquires "Mobile1" was the terminal identification information, "data 1113" as the data identification information, and "4Mbps as the communication bandwidth.

Then, as in the above-described case, the necessary band specifying section 603 of the media server 60 selects content data based on the content transmission request received by the service request transmission/reception section 601. In this example, the necessary band specifying section 603 selects content data identified by "data1113" as the data identification information. As such, the data identification information for identifying the content data selected by the necessary band specifying section 603 and the data identification information included in the received content transmission request coincide with each other.

Accordingly, the service request control section 602 generates a SIP message as a transmission permission notice. Then, the service request transmission/reception section 601 transmits the generated transmission permission notice to the service control server 50 via the connection control server 30 (step S214 in Fig. 14).

When the service request transmission/reception section 501 of the service control server 50 receives, from the connection control server 30, the SIP message as a transmission permission notice transmitted by the media server 60, the service request transmission/reception section 501 transfers the received transmission permission notice to the connection control server 30 (step S215 in Fig. 14).

When the connection control server 30 receives the transmission permission notice from the service control server 50, the connection control server 30 transmits a band fixing instruction to the transport control server 40, similar to step S 114 in Fig. 6 (step S216 in Fig. 14). As a result, the transport control server 40 performs band fixing processing. Then, similar to step S115 in Fig. 6, the connection control sender 30 transfers the transmission permission notice to the user terminal 20b (step S217 in Fig. 14).

Then, when the user terminal 20b receives the transmission permission notice from the connection control server 30, the user terminal 20b transmits a connection preparation completion notice to the media server 60 via the connection control serves 30 and the service control server 50. Thereby, similar to step S116 in Fig. 6, a connection between the user terminal 20b and the media server 60, having a communication bandwidth ("4Mbps" in this example) necessary for transmitting the content data selected by the service control server 50 from the media server 60 to the user terminal 20b, is established (step S218 in Fig. 14).

Then, similar to step S117 in Fig. 6, the media server 60 transmits the content data (in this example, content data identified by "data1113" as the data identification information) selected by the service control server 50 to the user terminal 20b with use of the established connection (step S219 in Fig. 14).

In this way, the user is able to continuously view the content (in this example, content identified by "content1111" as content identification information), which has been viewed using the user terminal 20a, with use of the user terminal 20b. At this time, the content data transmitted from the media server 60 is selected appropriately in accordance with the capability of the user terminal. Further, a communication band having a communication bandwidth necessary for transmitting the content data from the media server 60 to the user terminal is secured appropriately.

As described above, actions and effects similar to those of the first exemplary embodiment can also be achieved by the second exemplary embodiment of the content distribution system according to the present invention.

It should be noted that the necessary band specifying section (available band information acquisition means) 603 of the media server 60, according to a first exemplary variation of the second exemplary embodiment, is adapted to acquire available band information representing a communication bandwidth which can be used between the media server 60 and the user terminals 20a, 20b, ···.

Specifically, the necessary band specifying suction 603 transmits an available band transmission request for requesting transmission of available band information, to the transport control serves 40 via the connection control server 30.
When the transport control server 40 receives the available band transmission request, the transport control server 40 transmits the available band information to the media server 60 via the connection control serves 30.

Further, the necessary band specifying section 603 acquires the available band information received by the service request transmission/reception section 601. The necessary band specifying suction 603 selects content data based on the acquired available band information and the received content transmission request. Specifically, the necessary band specifying section 603 selects content data associated with a communication bandwidth not larger than the communication bandwidth represented by the available band information (available communication bandwidth).

According to the first exemplary variation, the media server 50 is able to select content data according to the available communication bandwidth. As such, if the available communication bandwidth is relatively small, the media server 60 can select content data having a smaller bit rate, while if the available communication bandwidth is relatively large, the media server 60 can select content data having a larger bit rate. As a result, it is possible to prevent a case where content data is not able to be transmitted due to the shortage of the communication bandwidth.

Further, in a second exemplary variation of the second exemplary embodiment, the necessary band specifying section (load information acquisition means) 603 of the media server 60 is adapted to acquire processing load information representing the processing load of the media server 60. In this example, the processing load information represents CPU availability (CPU utilization) which is a proportion of an actual value to an upper limit value of the number of computation executed by the CPU per unit time. It should be noted that the processing load information may be information representing the quantity of data stored in the memory (used capacity of the memory) or utilization of the memory which is a proportion of the "quantity of stored data" to the "total capacity" of the memory.

Further, the necessary band specifying section 503 selects content data based on the acquired processing load information and the received content transmission request. Specifically, the necessary band specifying section 603 selects content data associated with a communication bandwidth not larger than the communication bandwidth preset according to the processing load represented by the processing load information.

According to the second exemplary variation, the media server 60 is able to select content data according to the processing load of the media server 60. As such, if the processing load is relatively large, the media server 60 can select content data having a smaller bit rate, while if the processing load is relatively small, the media server 60 can select content data having a larger bit rate. As a result, it is possible to prevent a case where content data cannot be transmitted because of an excessive large processing load being applied to the media server 60.

### THIRD EXEMPLARY EMBODIMENT

Next, a content distribution system according to a third exemplary embodiment of the present invention will be described. The content distribution system of the third exemplary embodiment is different from the content distribution system of the first exemplary embodiment in that the content distribution system is adapted to change the communication bandwidth of the reserved communication band when the connection control server 30 receives a redirect request. As such, description will be given below focusing on such a difference.

### (Configuration)

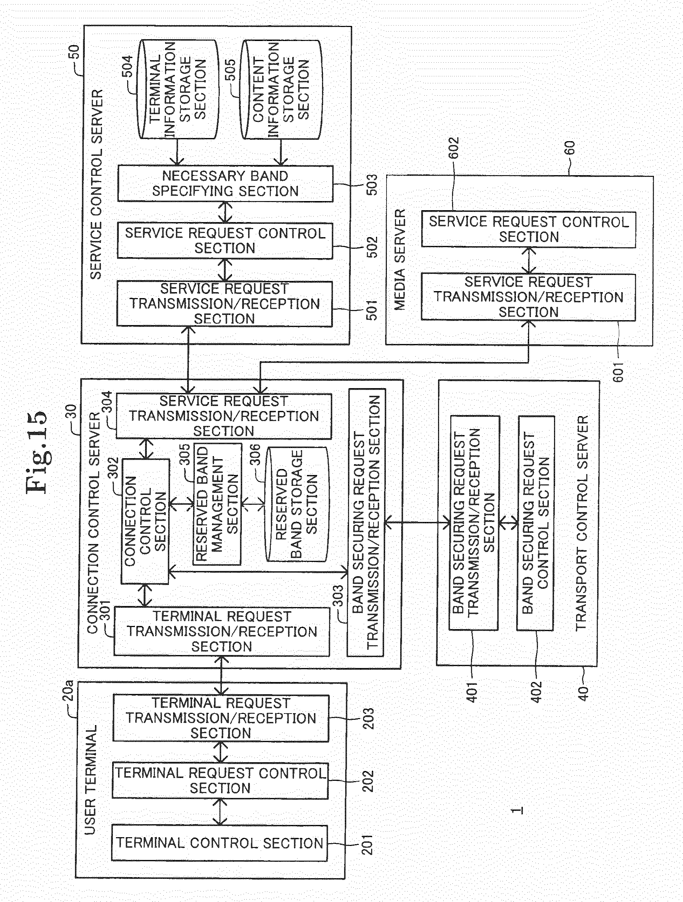

As shown in Fig. 15, functions of the connection control server 30 according to the third exemplary embodiment includes a reserved band management section 305 and a reserved band storage suction 306, in addition to the functions of the connection control serves 30 of the first exemplary embodiment.

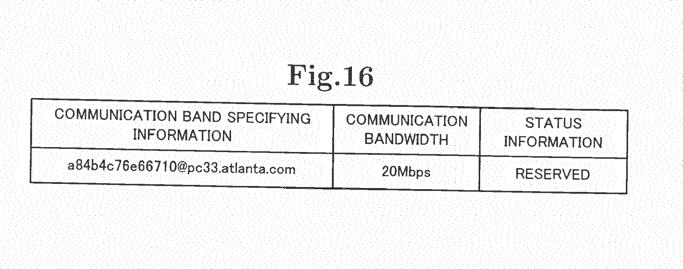

As shown in Fig. 16, the reserved band storage section 306 stores communication band specifying information, a communication bandwidth, and status information, in association with one another. The status information is information representing whether or not a communication band specified by communication band specifying information is reserved. If a communication band is reserved, the status information is set to information representing "reserved".

In this example, the reserved band storage section 306 stores "a84b4c76e66710@pc33.atlanta.com" as communication band specifying information, "20Mbps" as a communication bandwidth, and "reserved" as status information, in association with one another.

When the terminal request transmission/reception section 301 receives a content transmission request transmitted by the user terminal 20a in response to a redirect request, the connection control suction 302 determines whether or not the communication bandwidth included in the content transmission request and the communication bandwidth stored in the reserved band storage section 306 (that is, communication bandwidth of the reserved communication band) coincide with each other.

If the connection control section 302 determines that the communication bandwidth included in the content transmission request and the communication bandwidth stored in the reserved band storage section 306 differ from each other, the connection control section 302 generates a band release instruction. Further, in that case, the terminal request transmission/reception section 301 transmits a SIP message including a predetermined error code to the user terminal 20a.

On the other hand, if the connection control section 302 determines that the communication bandwidth included in the content transmission request and the communication bandwidth stored in the reserved band storage section 306 coincide with each other, the service request transmission/reception section 304 transmits (transfers) the received content transmission request to the service control server 50.

When the service request transmission/reception section 304 receives a redirect request (first response information) from the service control server 50, the connection control section 302 determines whether or not the communication bandwidth of the reserved communication band and the communication bandwidth included in the redirect request differ from each other (that is, whether or not the band is required to be changed).

If the connection control section 302 determines that the communication bandwidth of the reserved communication band and the communication bandwidth included in the redirect request differ from each other, the connection control section 302 generates a band change instruction which instructs to change the communication bandwidth of the reserved communication band. The band change instruction includes communication band specifying information for specifying the reserved communication band and the communication bandwidth after the change. In this example, the band change instruction is a Diameter message. The band securing request transmission/reception section 303 transmits the band change instruction generated by the connection control suction 302 to the transport control server 40.

On the other hand, if the connection control section 302 determines that The communication bandwidth of the reserved communication band and the communication bandwidth included in the redirect request coincide with each other, the connection control section 302 does not generate a band change instruction.

When the band securing request transmission/reception section 303 receives a charge processing response transmitted from the transport control server 40 in response to the band change instruction, the connection control section 302 determines whether or not the change processing response indicates that a change of the communication band was successful,

If the connection control section 302 determines that the change processing response indicates that a change of the communication bandwidth successful, the terminal request transmission/reception section 301 transmits (transfers) the redirect request received the service control serves 50 to the user terminal 20a. On the contrary, if the connection control section 302 determines the change processing response indicates that a change of the communication bandwidth was failed, the terminal request transmission/reception suction 301 transmits a SIP message including a predetermined error code to the user terminal 20a.

Further, if the band securing request transmission/reception section 401 receives a band change instruction from the connection control serves 30, the band securing request control section 402 performs band change processing to change the communication bandwidth of the communication band specified by the communication band specifying information (that is, reserved communication band) included in the band change instruction, of the communication band represented by the stored used communication band information.

As such, if it is possible to secure a communication band having the communication bandwidth after then change included in the band change instruction by using a communication band other than the communication band represented by the stored used communication band information, the band securing request control section 402 changes the communication bandwidth included in the used communication band information representing the communication band specified by the communication band specifying information included in the band change instruction, to the communication bandwidth after the change included in the band change instruction.

If the band change processing was performed successfully (that is, the communication bandwidth of the reserved communication band is changed), the band securing request transmission/reception section 401 transmits a change processing response indicating that a change of the communication bandwidth was successful, to the connection control server 30, In this example, the change processing response is a Diameter message. On the contrary, if the band change processing was failed (that is, the communication bandwidth of the reserved communication band is not changed), the band securing request transmission/reception section 401 transmits a change processing response indicating that a change of the communication bandwidth was failed, to the connection control server 30.

When the band securing request transmission/reception suction 303 receives a reservation processing response indicating that reservation of the communication bandwidth was successful, the reserved band management suction 305 stores the communication band specifying information and the communication bandwidth included in the band reservation instruction serving as the basis of the reservation processing response, and information representing "reserved" as status information, in the reserved band storage suction 306, in association with one another.

Further, when the band securing request transmission/reception section 303 receives a fixing processing response indicating that fixing of the communication band was successful, the reserved band management section 305 deletes the communication band specifying information included in the band fixing instruction serving as the basis of the fixing processing response, and the communication bandwidth and the status information associated with the communication band specifying information, from the reserved band storage section 306.

Similarly, when the band securing request transmission/reception section 303 receives a release processing response that release of the communication band was successful, the reserved band management section 305 deletes the communication band specifying information included in the band release instruction serving as the basis of the release processing response and the communication bandwidth and the status information associated with the communication band specifying information, from the reserved band storage suction 306.

Further, when the band securing request transmission/reception suction 303 receives a change processing response indicating that a change of the communication bandwidth was successful, the reserved band management section 305 changes the communication bandwidth, which is stored in the reserved band storage section 306 in association with the communication band specifying information included in the band change instruction serving as the basis of the change processing response, to the communication bandwidth after the change included in the band change instruction.

### (Operation)

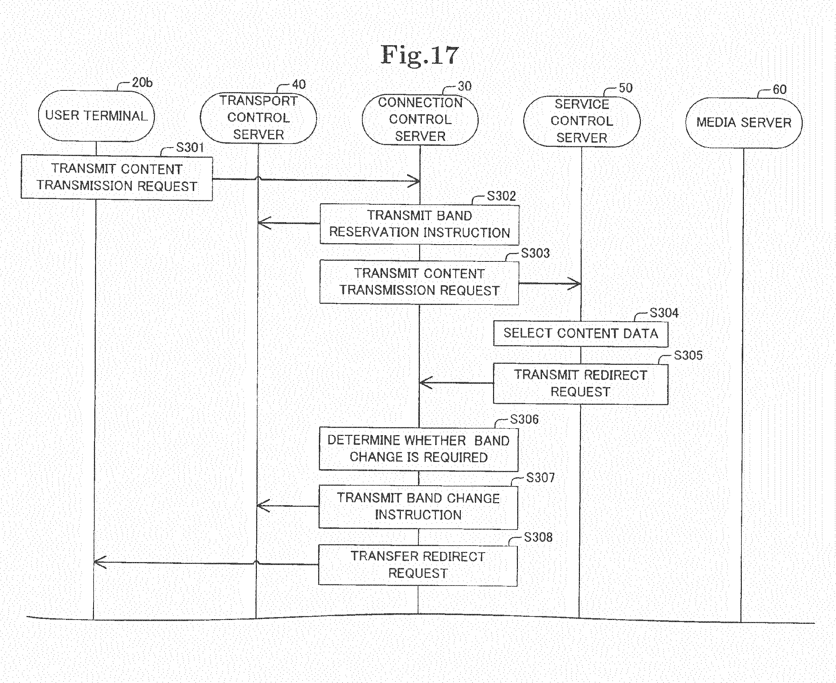

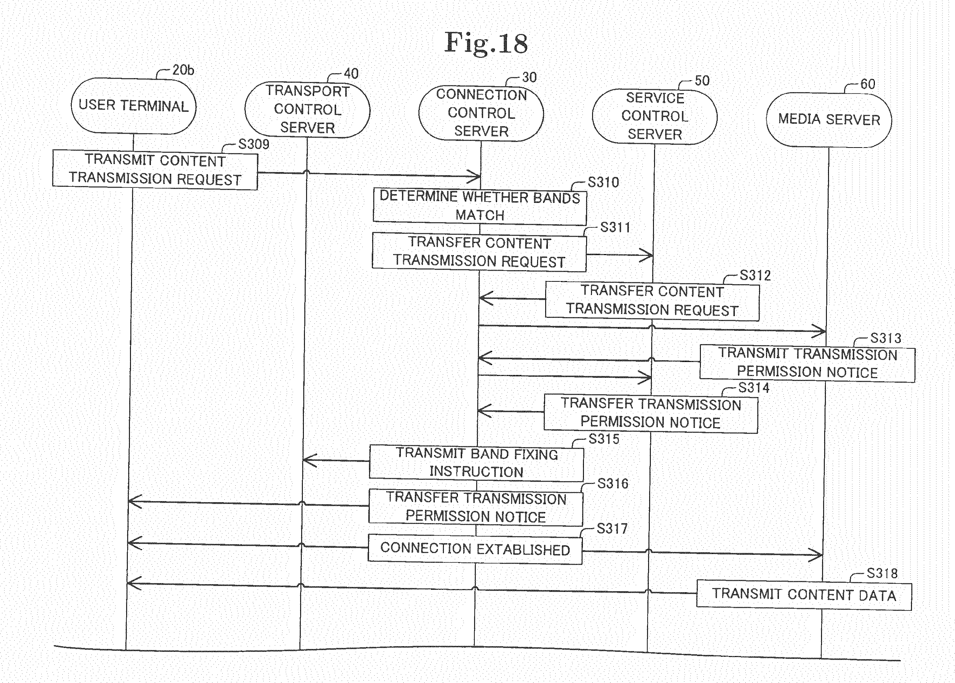

Next, operation of the content distribution system 1, configured as described above, will be described with reference to the sequence charts of Figs. 17 and 18. It should be noted that in this example, the same situation as that of the operation of the first exemplary embodiment is assumed. Accordingly, description will be given focusing on the point which is different from the operation of the content distribution system 1 according to the first exemplary embodiment, of the operation of the content distribution system 1 According to the third exemplary embodiment, .

First, similar to steps S101 to S105 in Fig. 5, the content distribution system 1 performs processing of steps S301 to S305 in Fig. 17.

Thereby, the service request transmission/reception section 304 of the connection control server 30 receives a redirect request from the service control server 50. Then, the connection control section 302 determines whether or not the communication bandwidth of the reserved communication band and the communication bandwidth included in the redirect request coincide with other (that is; whether the band is required to be changed) (step 5306 in Fig. 17).

In this example, the communication bandwidth of the reserved communication band is "20Mbps", while the communication bandwidth included in the redirect request is "4Mbps". As such, the communication bandwidth in the reserved communication band and the communication bandwidth included in the redirect request differ from each other.

Accordingly, the connection control section 302 generates a band change instruction which instructs to change the communication bandwidth of the reserved communication band. The band change instruction includes communication band specifying information for specifying the reserved communication band and "4Mbps" as a communication bandwidth after the change. Then, the band securing request transmission/reception section 303 transmits the generated band change instruction to the transport control serves 40 (step S307 in Fig. 17).

Then, when the band securing request transmission/reception section 401 receives the band change instruction from the connection control server 30, the band securing request control section 402 performs band change processing to change the communication bandwidth of the communication band specified by the communication band specifying information. (that is, reserved communication band) included in the band change instruction, of the communication band represented by the stored used communication band information. Then, the band securing request transmission/reception section 401 transmits a change processing response indicating that a change of the communication bandwidth was successful, to the connection control serves 30.

Then, when the band securing request transmission/reception section 303 receives the change processing response indicating that a change of the communication bandwidth was successful, the terminal request transmission/reception section 301 transfers the redirect request received from the service control server 50, to the user terminal 20b (step S308 in Fig. 17). It should be noted that the band securing request transmission/reception suction 303 may be adapted to transmit a band release instruction to the transport control server 40 if the band securing request transmission/reception suction 303 receives a change processing response indicating that a change of the communication bandwidth was failed.

Similar to step S108 in Fig. 6, when the user terminal 20b receives the redirect request transmitted by the media server 60, the user terminal 20b generates a content transmission request based on the receives request, and transmits the generated content transmission request to the connection control server 30 (step S309 in Fig. 18).

When the terminal request transmission/reception section 301 receives the content transmission request from the user terminal 20b, the connection control section 302 of the connection control server 30 determines whether or not the communication bandwidth included in the content transmission request and the communication bandwidth stored in the reserved band storage section 306 (that is, communication bandwidth of the communication band) coincide with each other (that is, matching of bands) (step S3 10 in Fig. 18).

At this point, the communication bandwidth of the reserved communication band is "4Mbps", and the communication bandwidth included in the content transmission request its "4Mbps". As such, the communication bandwidth included in the content transmission request and the communication bandwidth stored in the reserved band storage section 306 coincide with each other.

Accordingly, the service request transmission/reception section 304 transfers the content transmission request received by the terminals request transmission/reception section 301 to the service control server 50 (step S311 in Fig. 18).

It should be that if the connection control section 302 determines that the communication bandwidth included in the content transmission request and the communication bandwidth stored in the reserved band storage section 306 differ from each other, the connection control section 302 generates a band release instruction. Thereby, the band securing request transmission/reception suction 303 transmits the generated band release instruction to the transport control server 40. Further, in that case, the terminal request transmission/reception section 301 transmits an SIP message including a predetermined error code to the user terminal 20b.

Then, similar to steps S111 to S117 in Fig. 6, the content distribution system I performs processing of steps S312 to S318 in Fig. 18.

It should be noted that in this example, the band securing request transmission/reception section 401 of the transport control server 40 transmits a fixing processing indicating that fixing of the communication band was successful, in response to the band fixing instruction transmitted at step S315. Accordingly, the reserved band management suction 305 deletes the communication, band specifying information included in the band fixing instruction transmitted at step S315, and the communication bandwidth and the status information, associated with the communication band specifying information, from the reserved band storage section 306.

In this way, the user is able to continuously view the content (in this example, content identified by "content1111" as content identification information), which has been viewed using the user terminal 20a, using the user terminal 20b. At this time, the content data transmitted from the media server 60 is selected appropriately in accordance with the capability of the user terminal. Further, a communication band having a communication bandwidth necessary for transmitting the content data from the media serves 60 to the user terminal is secured appropriately.

As described above, actions and effects similar to those of the first exemplary embodiment can also be achieved by the third exemplary embodiment of the content distribution system according to the invention.

Further, in the content distribution system 1 according to the third exemplary embodiment, the connection control system is adapted to change, when receiving a redirect request (first response information), the communication bandwidth of the reserved communication band to the communication bandwidth included in the redirect request,

According to this configuration, the connection control system is able to reserve a necessary communication band earlier, compared with the case where a connection control system is adapted to release a reserved communication band at the time when it receives a redirect request. As a result, it is possible to prevent a shortage of communication, bandwidth when a connection is actually established.

### <first Exemplary Variation of Third Exemplary Embodiment>

Next, a content distribution system according to a first exemplary variation of the third exemplary embodiment of the present invention will be described. The content distribution system of the first exemplary variation is different from the content distribution system of the third exemplary embodiment in that the content distribution system is adapted to, when the connection control server 30 receives a redirect request, transmit a content transmission request to the service control server 50 without receiving a content transmission request from the user terminal 20b. Accordingly, description will be given below focusing on such a difference,

### (Configuration)

When the connection control section 302 of the first exemplary variation determines that a change processing response indicates that a change of the communication bandwidth was successful, the connection control section 302 generates a SIP message as a content transmission request based on the redirect request received from the service control server 50, without transferring the received redirect request to the user terminal 20a. The content transmission request includes data identification information and communication bandwidth included in the received redirect request (first response information).

When the content transmission request is generated by the connection control section 302, the service request transmission/reception section 304 transmits the generated content transmission request to the service control server 50.

### (Operation)

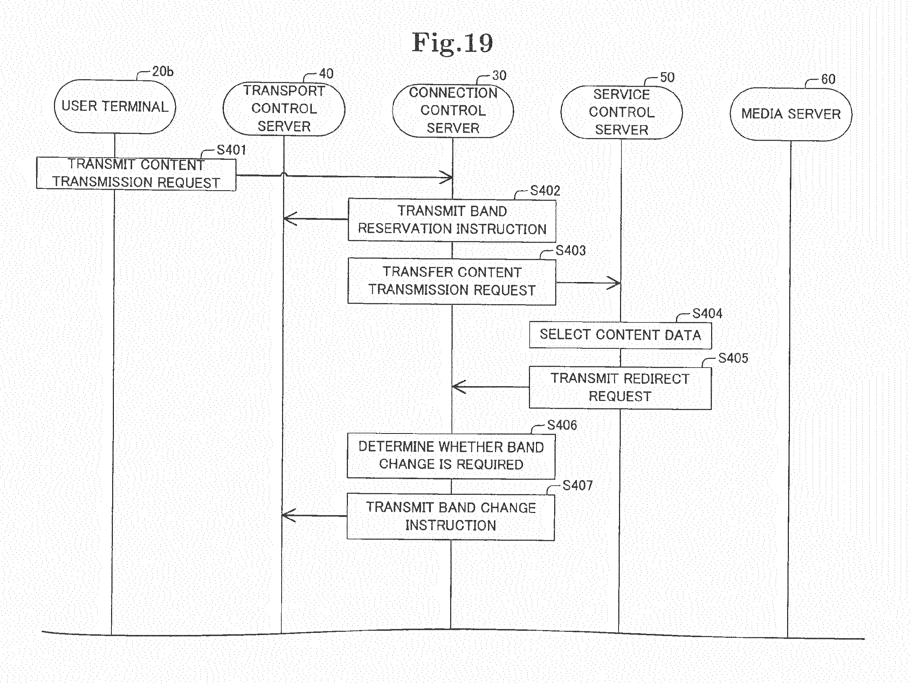

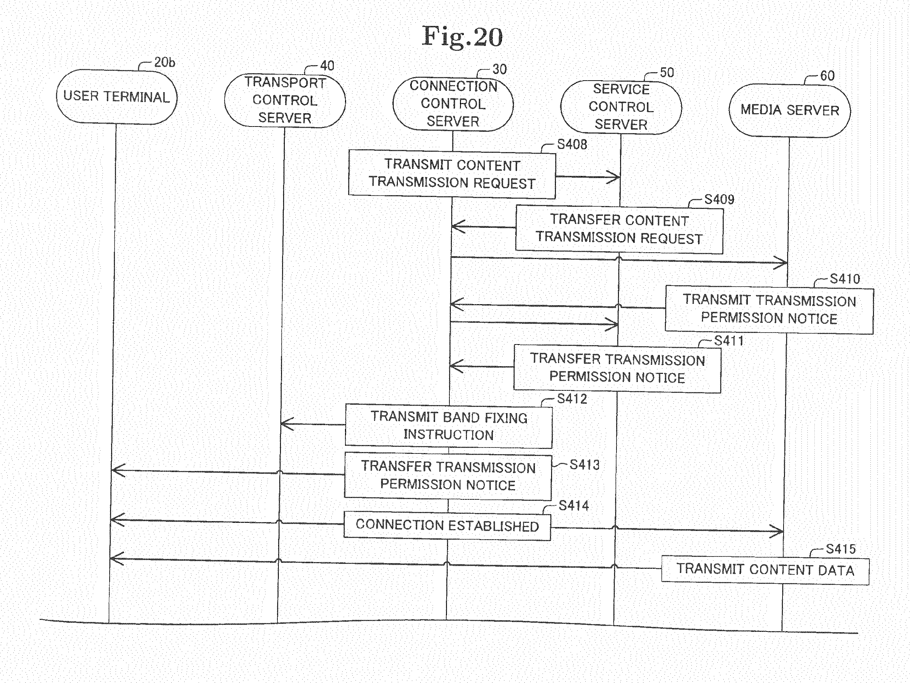

Next, operation of the content distribution system 1 configured as described above will be described with reference to the sequence charts of Figs. 19 and 20. It should be noted that in this example, the same situation as that of the operation of the third exemplary embodiment is assumed. Accordingly, description will be given focusing on the point which is different from the operation of the content distribution system 1 according to the third exemplary embodiment, of the operation of the content distribution system 1 according to the first exemplary Variation of the third exemplary embodiment.

First, similar to steps S301 to S307 in Fig. 5, the content distribution system 1 performs processing of steps S401 to S407 in Fig. 19.

Then, when the band securing request transmission/'reception section 303 receives a change processing response indicating that a change of the communication bandwidth was successful, the connection control section 302 generates a SIP message as a content transmission request based on the redirect request received from the service control server 50 (step S408 in Fig. 20). Then, the service request transmission/reception suction 304 the generated content transmission request to the service control server 50.

Then, similar to steps S312 to S318 in Fig. 18, the content distribution system 1 performs processing of steps S409 to S415 in Fig. 20.

As described above, actions and effects similar to those of the third exemplary embodiment can also be achieved by the first exemplary Variation of the third exemplary embodiment of the content distribution system according to the invention.
Further, according to the first exemplary variation, processing of transmitting a redirect request (first response instruction) by the connection control server 30 to the user terminal 20b and transmitting a content transmission request by the user terminal 20b to the connection control server 30 is omitted. As a result, the communication load between the user terminal 20b and the connection control server 30 can be reduced.

### <Second Exemplary Variation of Third Exemplary Embodiment>

Next, a content distribution system according to a second exemplary variation of the third exemplary embodiment of the present invention will be described. The content distribution system of the second exemplary variation is different from the content distribution system of the third exemplary embodiment in that the connection control system is adapted to change a communication bandwidth when receiving a content transmission request transmitted by a user terminal in response to a redirect request. Accordingly, description will be given below focusing on such a difference.

### (Configuration)

When the service request transmission/reception section 304 receives a redirect request (first response information) from the service control server 50, the terminal request transmission/reception section 301 of the third exemplary variation transmits (transfers) the received redirect request to the user terminal 20a,

Further, when the terminal request transmission/reception section 301 receives a content transmission request transmitter by the user terminal 20a in response to the redirect request, the connection control section 302 determines whether or not the communication bandwidth of the reserved communication band and the communication bandwidth included in the received content transmission request differ from each other (that is, whether the band is required to be change).

If the connection control section 302 determines that the communication bandwidth of the reserved communication band and the communication bandwidth included in the content transmission request differ from each other, the connection control section 302 generates a band change instruction which instructs to change the communication bandwidth of the reserved communication band. The band change instruction includes communication band specifying information for specifying the reserved communication band, and a communication band after the change. The band securing request transmission/reception section 303 transmits the band change instruction generated by the connection control section 302 to the transport control server 40.

On the other hand, if the connection control section 302 determines that the communication bandwidth of the reserved communication band and the communication bandwidth included in the content transmission request coincide with each other, the connection control section 302 does not generate a band change instruction.

When the band securing request transmission/reception section 303 receives a change processing response transmitted from the transport control server 40 in response to the band change instruction, the connection control section 302 determines whether or not the change processing response indicates that a change of the communication bandwidth was successful.

If the connection control section 302 determines that the change processing response indicates that a change of the communication bandwidth was successful, the service request transmission/reception suction 304 transmits (transfers) the content transmission request received from the user terminal 20a to the service control server 50. On the other hand, if the connection control section 302 determines that the change processing response indicates that a change of the communication bandwidth was failed, the terminal request transmission/reception section 301 transmits a SIP message including a predetermined error code to the user terminal 20a.

### (Operation)

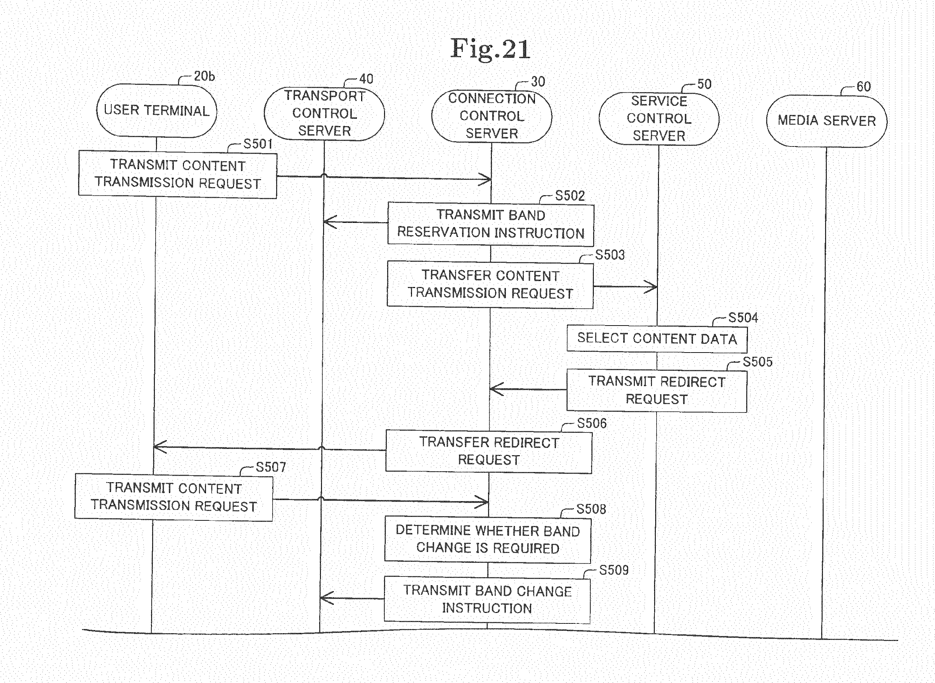

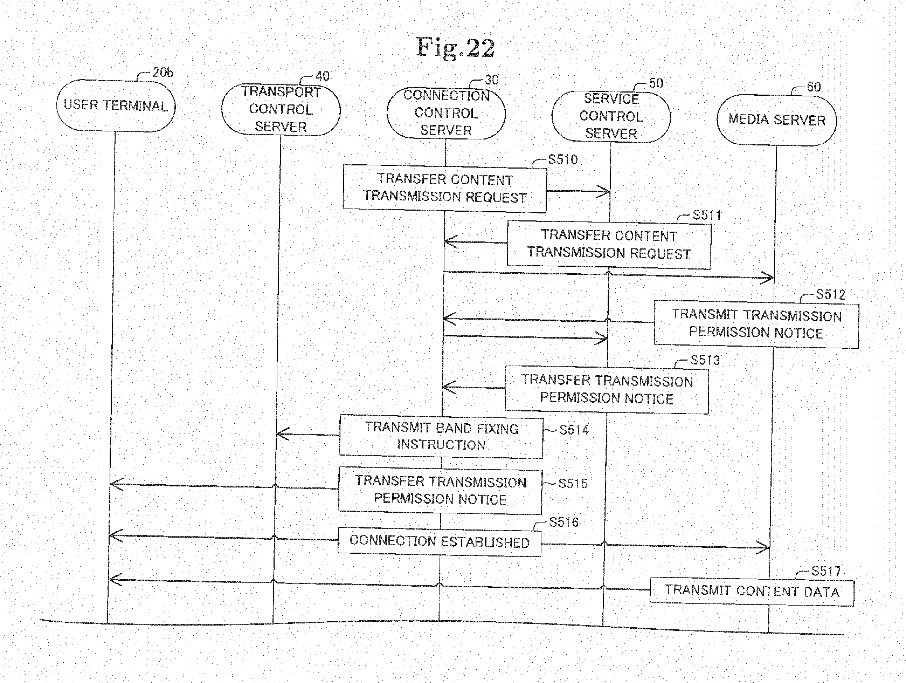

Next, operation of the content distribution system 1 configured as described above will be described with reference to the sequence charts of Figs. 21 and 22. It should be noted that in this example, the same situation as that of the operation of the third exemplary embodiment is assumed. Accordingly, description will be given focusing on the point which is different from the operation of the content distribution system 1 according to the third exemplary embodiment, of the operation of the content distribution system 1 according to the second exemplary variation of the third exemplary embodiment,.

First, similar to steps S301 to S305 in Fig. 17, the content distribution system 1 performs processing of steps S501 to S505 in Fig. 21.

Thereby, the service request transmission/reception section 304 receives a redirect request from the service control server 50. Then, the terminal request transmission/reception section 301 transfers the received redirect request to the user terminal 20b (step S506 in Fig 21).

Similar to step S108 in Fig. 6, when the user terminal 20b receives a redirect request transmitted by the service control server 50, the user terminal 20b generates a content transmission request based on the received redirect request, and transmits the generated content transmission request to the connection control server 30 (step S507 in Fig. 21).

Thereby, the terminal request transmission/reception section 301 of the connection control server 30 receives the content transmission request from the user terminal 20b. Then, the connection control section 302 determines whether or not the communication bandwidth of the reserved communication band and the communication bandwidth included in the content transmission request differ from each other (that is, whether the band is required to be changed) (step S508 in Fig.21).

In this example, the communication bandwidth of the reserved communication band is "20Mbps", while the communication bandwidth included in the content transmission request is "4Mbps". As such, the communication bandwidth of the reserved communication, band and the communication bandwidth included in the content transmission request differ from each other.

Accordingly, the connection control suction 302 generates a band change instruction which instructs to change the communication bandwidth of the reserved communication band. The band change instruction includes communication band specifying information for specifying the reserved communication band, and "4Mbps" as a communication bandwidth after the change. Then, the band securing request transmission/reception section 303 transmits the generated band change instruction to the transport control server 40 (step S509 in Fig. 21).

Then, when the band securing request transmission/reception section 401 receives the band change instruction from the connection control server 30, the band securing request control section 402 performs band change processing to change the communication bandwidth of the communication band specified by the communication band specifying information (that is, reserved communication band) included in the band change instruction, of the communication band represented by the stored used communication band information. Then, the band securing request transmission/reception section 401 transmit a change processing response indicating that a change of the communication bandwidth was successful, to the connection control server 30.

Then, when the band securing request transmission/reception suction 303 receives a change processing response indicating that change of the communication bandwidth was successful, the service request transmission/reception section 304 transfers the content transmission request received from the user terminal 20b to the service control server 50 (step S510 in Fig. 22).

Then, similar to steps S312 to S318 in Fig. 18, the content distribution system 1 performs processing of steps S511 to S517 in Fig. 22.

As described above, actions and effects similar to those of the third exemplary embodiment can also be achieved by the second exemplary variation of the third exemplary embodiment of the content distribution system according to the present invention.

### FOURTH EXEMPLARY EMBODIMENT

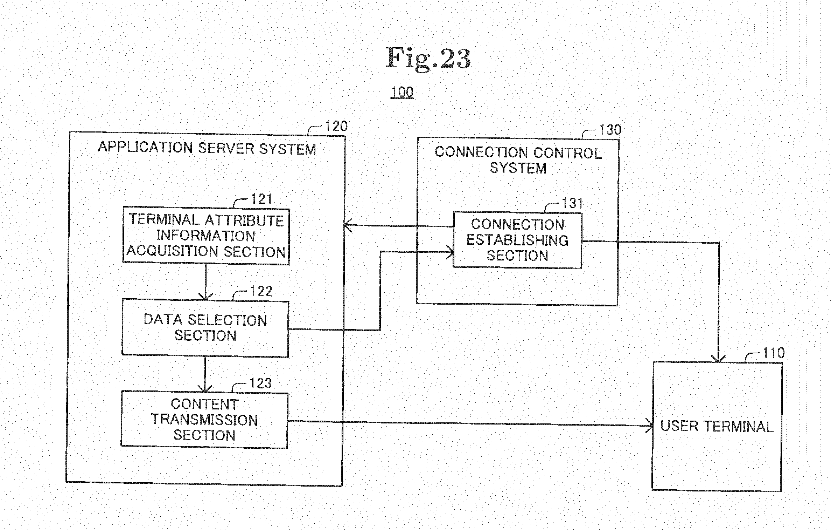

Next, a communication system according to a fourth exemplary embodiment of the present invention will be described with reference to Fig. 23.

A content distribution system 100 according to the fourth exemplary embodiment includes a terminal 110, an application server system 120, and a connection control system 130.

The application server system 120 includes:
a terminal attribute information acquisition section (terminal attribute information acquisition means) 121 for acquiring terminal attribute information representing capability of the user terminal 110; the capability being a capability that based on content data representing content, the user terminal 110 outputs the content; and
a data selection section (data selection means) 122 for selecting content data representing content based on the acquired terminal attribute information.

The connection control system 130 includes
a connection establishing section (connection establishing means) 131 for establishing a connection between the application server system 120 and the user terminal 110, the connection having a communication bandwidth necessary for transmitting the selected content data from the application server system 120 to the user terminal 110.

The application server system, 120 further includes
a content transmission section (content transmission means) 123 for transmitting the selected content data to the user terminal 110 with use of the established connection.

According to this configuration, it is possible to prevent transmission of content data that the user terminal 110 cannot output (is incapable of outputting), from the application server system 120 to the user terminal 110. As a result, the user terminal 110 is able to output content reliably based on the received content data.

Accordingly, even in the case where a user wishes to continuously view content, which has been viewed using a first user terminal, using a second user terminal and where the terminal attribute information (for example, the display resolution of the user terminal, the information processing capability of the user terminal, and the like) of the first user terminal and the terminal attribute information of the second user terminal are different, the user is able to view the content continuously using the second user terminal.

Further, according to the above-described configuration, a connection having a communication bandwidth necessary for transmitting content data from the application server system 120 to the user terminal 110 is established in advance, and with use of the connection, the content data is transmitted. Accordingly, it is possible to reliably prevent deterioration of the communication quality when the content data is transmitted.

As described above, according to the content distribution system, 100, it is possible to prevent deterioration of the communication quality when the content data is transmitted to the user terminal 110 and also possible to prevent transmission of content data that the user terminal 110 is incapable of outputting, to the user terminal 110.

In this case, it is preferable that
the user terminal includes
a terminal identification information transmission means for transmitting terminal identification information for identifying the user terminal to the application server system, that the application server system includes:
a terminal information storage means for storing the terminal identification information and the terminal attribute information in association with each other; and
a terminal identification information reception means for receiving the terminal identification information transmitted by the user terminal, and that
the terminal attribute information acquisition means is adapted to acquire the terminal attribute information stored in the terminal information storage means in association with the received terminal identification information.

For example, the terminal attribute information includes a plurality of items of information such as the display resolution of the user terminal and the information processing capability of the user terminal. As such, according to the above configuration, it is possible to reduce the quantity of information to be transmitted from the user terminal to the application server system, compared with the case where the user terminal transmits terminal attribute information to the application server system. As a result, the communication load between the user terminal and the application server system can be reduced.

In this case, it is preferable that
the user terminal includes
a data identification information transmission means for transmitting data identification information for identifying the content data to the application server system, that
the application server system includes
a data identification information reception means for receiving the data identification information transmitted by the user terminal, and that
the data selection means is adapted to select content data representing content identical to the content represented by the content data identified by the received data identification information.

According to this configuration, it is possible to transmit content data in which the user terminal to be used by the user is capable of outputting the content, of the content data representing the content that the user wishes to view, to the user terminal. As a result, the user is able to view the content that the user wishes to view in a reliable manner.

In this case, it is preferable that
the user terminal includes
a content transmission request transmission means, including the terminal identification information transmission means and the data identification information transmission means, for transmitting a content transmission request to the application server system via the connection control system, the content transmission request including the terminal identification information, the data identification information, and a communication bandwidth necessary for transmitting content data identified by the data identification information from the application server system to the user terminal, and that
the connection establishing means is adapted to, when receiving the content transmission request from the user terminal, perform band reservation processing to reserve a communication band having the communication bandwidth included in the content transmission request between the application server system and the user terminal.

Meanwhile, the content distribution system may be configured such that after the connection control system receives the content transmission request, a connection is established only when the connection control system receives a response from the application server system.

In that case, if another connection is established during a period from the time when the connection control system receives the content transmission request until the time when the connection control system receives a response from the application server system, there is a possibility that the communication bandwidth is in short.

However, according to the above-described configuration, as a communication band is reserved when the connection control system receives the content transmission request, it is possible to prevent the shortage of the communication bandwidth when the connection is actually established.

In this case, it is preferable the application server system includes
a response information transmission means for, when receiving the content transmission request, if the data identification information included in the received content transmission request and data identification information for identifying the content data selected by the data selection means based on the content transmission request differ from each other, transmitting first response information to the connection control system, the first response information including the data identification information for identifying the content data selected by the data selection means, and a communication bandwidth necessary for transmitting the content data selected by the data selection means from the application server system to the user terminal.

In this case, it is preferable that
the connection establishing means is adapted to, when the connection control system receives the first response information from the application server system, transmit the first response information to the user terminal and release the reserved communication band, and that
the content transmission request transmission means is adapted to, when the user terminal receives the first response information, transmit the content transmission request including the data identification information and the communication bandwidth which are included in the first response information, to the application server system via the connection control system.

Considering a case where the reserved communication band is not released when the connection control system receives the first response information, if a connection is not established thereafter, a state where the communication band is reserved is maintained. This causes a problem that an available communication bandwidth is narrowed needlessly.

In contrast, according to the above-described configuration, it is possible to prevent a state the communication band is reserved from being maintained needlessly, As a result, it is possible to prevent an available communication bandwidth from being narrowed needlessly.

Further, in another form of the content distribution system, it is preferable that
the connection establishing means is adapted to, when the connection control system receives the first response information from the application server system, transmit the first response information to the user terminal and change the communication bandwidth of the reserved communication band to the communication bandwidth included in the first response information, and that
the content transmission request transmission means is adapted to, when the user terminal receives the first response information, transmit the content transmission request including the data identification information, and the communication bandwidth which are included in the first response information, to the application server system via the connection control system.

Now, the case where a communication bandwidth necessary for transmitting content data selected by the application server system is larger than the communication bandwidth included in the content transmission request first transmitted by the user terminal is assumed. In that case, if the connection control system is adapted to release the reserved communication band at the time when it receives the first response information and then reserve the communication band again at the time when it receives the content transmission request from the user terminal, the communication bandwidth may be in short due to another reservation made during the period from the time when the reserved communication band is released until the time when the communication band is reserved again.

However, according to the above configuration, a necessary communication band can be reserved earlier, compared with the case where the connection control system is adapted to release the reserved communication band at the when it receives the first response information. As a result, it is possible to prevent shortage of the communication bandwidth when the connection is actually established.

In this case, it is preferable that the connection establishing means is adapted not to perform the band reservation processing if, when receiving the content transmission request from the user terminal, the communication, bandwidth of the reserved communication band coincides with the communication bandwidth included in the content transmission request.

In this case, it is preferable that
the response information transmission means is adapted to, when the application server system receives the content transmission request, if the data identification information included in the received content transmission request coincides with the data identification information for identifying the content data selected by the data selection means based on the content transmission request, transmit, to the connection control system, second response information for instructing a communication, relay device to fix the communication band, the communication relay device constituting the reserved communication band and relaying communication, and that
the connection establishing means is adapted to, when receiving the second response information from the application server system, perform band fixing processing to instruct the communication relay device to fix the communication band, the communication relay device constituting the reserved communication band and relaying communication,.

In this case, it is preferable that the first response information is information representing a redirect request for instructing transmission of the content transmission request including the data identification information and the communication band width which are included in the first response information, to the application server system,

Further, in another form of the content distribution system, it is preferable that
the connection establishing means is adapted to, when the connection control system receives the first response information from the application server system, change the communication bandwidth of the reserved communication band to the communication bandwidth included in the first information, and transmit the content transmission request including the data identification information and the communication bandwidth which are included in the received first response information, to the application server system.

According to this configuration, processing of transmitting first response infomation by the connection control system to the user terminal and transmitting a content transmission request by the user terminal to the connection control system can be omitted. As a result, the communication load between the user terminal and the connection control system can be reduced.

In this case, it is preferable that
the application server system includes an available band information acquisition means for acquiring available band information representing a communication bandwidth which is available between the application server system and the user terminal, and that
the data selection means is further adapted to the content data based on the acquired available band information.

According to this configuration, the application server system is able to select content data according to the available communication bandwidth. As such, if the available communication bandwidth is relatively small, the application server system can select content data having a smaller bit rate, while if the available communication bandwidth is relatively large, the application server system can select content data having a larger bit rate. As a result, it is possible to prevent a case where content data is not able to be transmitted due to the shortage of the communication bandwidth.

In this case, it is preferable that
the application server system include
a processing load information acquisition means for acquiring processing load information representing a processing load of the application server system, and that
the data selection means is further adapted to select the content data based on the acquired processing load infon-nation.

According to this configuration, the application server system is able to select content data according to the processing load of the application server system. As such, if the processing load is relatively large, the application server system can select content data having a smaller bit rate, while if the processing load is relatively small, the application server system can select content data having a larger bit rate. As a result, it is possible to prevent a case where content data cannot be transmitted because of an excessive large processing load being applied to the application server system.

In this case, it is preferable that the terminal attribute information includes at least one of items of information each representing a resolution of a display included in the user terminal, an information processing capability of a processing device included in the user terminal, a format of content data which is able to be output by the user terminal, or a storage capacity of a storage device included in the user terminal.

Further, a content distribution method, which is another aspect of the present invention, is a method applied to a content distribution system including a user terminal, an application server system, and a connection control system. The method includes:
acquiring, by the application server system, terminal attribute information representing a capability of the user terminal, the capability being a capability that based on content data representing content, the user terminal outputs the content;
selecting, by the application server system, content data representing content based on the acquired terminal attribute information;
establishing, by the connection control system, a connection between the application server system and the user terminal, the connection having a communication bandwidth necessary for transmitting the selected content data from the application server system to the user terminal; and
transmitting, by the application server system, the selected content data to the user terminal with use of the established connection.

In this case, it is preferable that the content distribution method includes:
transmitting, by the user terminal, terminal identification information for identifying the user terminal to the application server system;
receiving, by the application server system, the terminal identification information transmitted by the user terminal; and
acquiring, by the application server system, the terminal attribute information stored in association with the received terminal identification information in a storage device which stores the terminal identification information and the terminal attribute information in association with each other.

In this case, it is preferable that the content distribution method includes:
transmitting, by the user terminal, data identification information for identifying the content data to the application server system;
receiving, by the application server system, the data identification information transmitted by the user terminal; and
selecting, by the application server system, content data representing content identical to the content represented by the content data identified by the received data identification information.

In this case, it is preferable that the content distribution method includes:
transmitting, by the user terminal, a content transmission request to the application server system via the connection control system, the content transmission request including the terminal identification information, the data identification information, and a communication band width necessary for transmitting content data identified by the data identification information from the application server system to the user terminal, and
by the connection control system, when receiving the content transmission request from the user terminal, performing band reservation processing to reserve a communication band having the communication bandwidth included in the content transmission request between the application server system and the user terminal.

In this case, it is preferable that the content distribution method includes
by the application server system, when receiving the content transmission request, if the data identification information included in the received content transmission request and data identification information for identifying the content data selected based on the content transmission request differ from each other, transmitting first response information to the connection control system, the first response information including the data identification information for identifying the selected content data and a communication bandwidth necessary for transmitting the selected content data from the application server system to the user terminal.

In this case, it is preferable that the content distribution method includes:
by the connection control system, when receiving the first response information from the application server system, transmitting the first response information to the user terminal and releasing the reserved communication band, and
by the user terminal, when receiving the first response information, transmitting the content transmission request including the data identification information and the communication bandwidth which are included in the first response information, to the application server system via the connection control system.

Further, according to another form of the present invention, it is preferable that the content distribution method includes:
by the connection control system, when receiving, the first response information from the application server system, transmitting the first response information to the user terminal and changing the communication bandwidth of the reserved communication band to the communication bandwidth included in the first response information, and
by the user terminal, when receiving the first response information, transmitting the content transmission request including the data identification information and the communication bandwidth which are included in the first response information, to the application server system via the connection control system.

Further, a server device, which is another aspect of the present invention, includes
a terminal attribute information acquisition means for acquiring terminal attribute information representing a capability of a user terminals, the capability being a capability that based on content data representing content, the user terminal outputs the content; and
a data selection means for selecting content data representing content based on the acquired terminal attribute information.

In this case, it is preferable that the server device includes
a content transmission means for transmitting the selected content data to the user terminal with use of a connection established between the user terminal and the server device by a connection control system.

In this case, it is preferable that
the server device includes:
a terminal information storage means for storing terminal identification information for identifying the user terminal and the terminal attribute information in association with each other; and
a terminal identification information reception means for receiving the terminal identification information transmitted by the user terminal, and that
the terminal attribute information acquisition means is adapted to acquire the terminal attribute information stored in the terminal information storage means in association with the received terminal identification information,

In this case, it is preferable that
the server device includes a data identification information reception means for receiving data identification information for identifying the content data from the user terminal, and that
the data selection means is adapted to select content data representing content identical to the content represented by the content data identified by the received data identification information.

In this case, it is preferable that the server device includes
a response information transmission means for, when receiving a content transmission request including the terminal identification information, the data identification information, and a communication bandwidth necessary for transmitting content data identified by the data identification information to the user terminal, if the data identification information included in the received content transmission request and data identification information for identifying the content data selected by the data selection means based on the content transmission request differ from each other, transmitting first response information to the connection control system, the first response information including the data identification information for identifying the content data selected by the data selection means and a communication bandwidth necessary for transmitting the content data selected by the data selection means to the user terminal.

Further, a program, which is another aspect of the present invention, is a program for causing a server device to realize:
a terminal attribute information acquisition means for acquiring terminal attribute information, representing a capability of a user terminal, the capability being a capability that based on content data representing content, the user terminal outputs the content; and
a data selection means for selecting content data representing content based on the acquired terminal attribute information.

In this case, it is preferable that the program further causes the server device to realize
a content transmission means for transmitting the selected content data to the user terminal with use of connection established between the user terminal and the server device by a connection control system.

Further, a server device, which is another aspect of the present invention, includes
a connection establishing means for establishing a connection between an application server system and a user terminal, the connection haying a communication bandwidth necessary for transmitting content data selected by the application server system from the application server system to the user terminal.

In this case, it is preferable that the connection establishing means is adapted to, when receiving a content transmission request from the user terminal, the content transmission request including terminal identification information for identifying the user terminal, data identification information for identifying the content data, and a communication bandwidth necessary for transmitting the content data identified by the data identification information from the application server system to the user terminals, perform band reservation processing to reserve a communication band having the communication bandwidth included in the content transmission request between the application server system and the user terminals.

In this case, it is preferable that the connection establishing means is adapted to, when receiving a first response information from the application server system, the first response information, including the data identification information for identifying the content data selected by the application server system and the communication bandwidth necessary for transmitting the content data identified by the data identification information from the application server system so the user terminal, transmit the first response information to uses terminal and release the reserved communication band.

Further, in another form of the server device, it is preferable that the connection establishing means is adapted to, when receiving a first response information from the application server system, the first response information including the data identification information for identifying the content data selected by the application server system and the communication bandwidth necessary for transmitting the content data identified by the data identification information from the application server system to the user terminal, transmit the first response information to the user terminal and change the communication bandwidth of the reserved communication band to the communication bandwidth included in the first response information.

Further, a program, which is another aspect of the present invention, is a program for causing a server device to realize
a connection establishing means for establishing, a connection between an application server system and a user terminal, the connection having a communication bandwidth necessary for transmitting content data selected by the application server system from the application server system to the user terminal.

In this case, it is preferable that the connection establishing means is adapted to, when receiving a content transmission request from the user terminal, the content transmission request including terminal identification information for identifying the user terminal, data identification information for identifying the content data, and a communication bandwidth necessary for transmitting the content data identified by the data identification information from the application server system to the user terminal, perform band reservation processing to reserve a communication band having the communication bandwidth included in the content transmission request between the application server system and the user terminal.

In this case, it is preferable that the connection establishing means is adapted to, when receiving a first response information from the application server system, the first response information including the data identification information for identifying the content data selected by the application server system and the communication, bandwidth necessary for transmitting the content data identified by the data identification information from the application server system to the user terminal, transmit the first response information to the user terminal and release the reserved communication band.

Further, in another form of the program, it is preferable that
the connection establishing means is adapted to, when receiving a first response information from the application server system, the first response information including the data identification information for identifying the content data selected by the application server system and the communication bandwidth necessary for transmitting the content data identified by the data identification information from the application server system to the user terminal, transmit the first response information to the user terminal and change the communication bandwidth of the reserved communication band to the communication bandwidth included in the first response information.

As an invention of a content distribution method, a server device, or a program having the above-described configuration, has actions similar to those of the above-described content distribution system, such an invention can also achieve the object of the present invention.

While the present invention has been described with reference to the exemplary embodiments, the present invention is not limited to these exemplary embodiments. It will be understood by those skilled in the art that various changes in form and details may be made therein within the scope of the present invention,

For example, in another exemplary variation of each of the exemplary embodiments, the content distribution system may include a plurality of media servers. In that case, it is preferable that the service control server is adapted to select a media server which transmits content data, and transmit information for specifying the selected media server to a user terminal. Further, in another exemplary variation of each of the exemplary embodiments, the connection control system may include a plurality of connection control servers.

Further, in another exemplary variation of each of the exemplary embodiments, a user terminal may be adapted to transmit terminal attribute information to the application server system.

Further, in another exemplary variation of each of the exemplary embodiments, the content distribution system may be adapted such that terminal attribute information includes data format information, representing the format of content data that a user terminal is capable of outputting. In that case, it is preferable that the application server system is adapted to select content data having the format represented by the data format information included in the acquired terminal attribute information.

Further, in another exemplary variation of each of the exemplary embodiments, terminal attribute information may be any one of items of information each representing the resolution of the display included in the user terminal, the information processing capability of the processing device included in the user terminal, a format of content data that the user terminal is capable of outputting, or the storage capacity of the storage device included in the user terminal, or any combination of those items of information.

Further, a user terminal may be a personal computer, a mobile telephone terminal, a PHS (Personal Handyphone System), a PDA (Personal Data Assistance, Personal Digital Assistant), a car navigation terminal, or a game terminal.
Further, while content is videos in each of the exemplary embodiments, it may be only pictures or only sounds.

It should be noted that while each of the functions of the content distribution system is realized by executing the program (software) by the CPU in each of the exemplary embodiments, it may be realized by hardware such as a circuit.

Further, while the program is stored in a storage device in each of the exemplary embodiments, it may be stored in a computer-readable recording medium. Recording media may be portable media such as flexible disks, optical disks, semiconductor memories, and the like, for example.

Further, as another exemplary Variation of the exemplary embodiments, any combination of the above-described exemplary embodiments and exemplary modifications may be adopted.

This application is based upon and claims the benefit of priority from Japanese patent application No. 2009-233965, filed on October 8, 2009, the disclosure of which is incorporated herein in its entirety by reference.

### INDSTURIAL APPLICABILITY

The present invention is applicable to a video-on-demand system for distributing content over IP networks, an IPTV system for performing TV broadcasting over IP networks, and the like.

### REFERENCE NUMERALS

- 1: content distribution system
- 10: communication network
- 20a,20b: user terminal
- 30: connection control server
- 40: transport control server
- 50: service control server
- 60: media server
- 100: content distribution system
- 110: user terminal
- 120: application server system
- 121: terminal attribute information acquisition section
- 122: data selection section
- 123: content transmission section
- 130: connection control system
- 131: connection establishing section
- 201: terminal control section
- 202: terminal request control section
- 203: terminal request transmission/reception section
- 301: terminal request transmission/reception section
- 302: connection control section
- 303: band securing request transmission/reception section
- 304: service request transmission/reception section
- 305: reserved band management section
- 306: reserved band storage section
- 401: band securing request transmission/reception section
- 402: band securing request control section
- 501: service request transmission/reception section
- 502: service request control section
- 503: necessary band specifying section
- 504: terminal information storage section
- 505: content information storage section
- 601: service request transmission/reception section
- 602: service request control section
- 603: necessary band specifying section
- 604: terminal information storage section
- 605: content information storage section

## Claims

1. A content distribution system comprising a user terminal, an application server system, and a connection control system, wherein
the application server includes:
terminal attribute information acquisition means for acquiring terminal attribute information, representing a capability of the user terminal, the capability being a capability that based on content data representing content, the user terminal outputs the content; and
data selection means for selecting content data representing content based on the acquired terminal attribute information,
the connection control system includes
connection establishing means for establishing a connection between the application server system and the user terminal, the connection having a communication bandwidth necessary for transmitting the selected content data from the application server system to the user terminal, and
the application server system further includes
content transmission means for transmitting the selected content data to the user terminal with use of the established connection.

2. The content distribution system according to Claim 1, wherein
the user terminal includes
terminal identification information transmission means for transmitting terminal identification information for identifying the user terminal to the application server system,
the application server system includes:
terminal information storage means for storing the terminal identification information and the terminal attribute information in association with each other; and
terminal identification information reception means for receiving the terminal identification information transmitted by the user terminal, and
the terminal attribute information acquisition means is adapted to acquire the terminal attribute information stored in the terminal information storage means in association with the received terminal identification information.

3. The content distribution system according to Claim 1 or 2, wherein
the user terminal includes
data identification information transmission means for transmitting data identification information for identifying the content data to the application server system,
the application server system includes
data identification information reception means for receiving the data identification information transmitted by the user terminal, and
the data selection means is adapted to select content data representing content identical so the content represented by the content data identified by the received data identification information.

4. The content distribution system according to Claim 3, wherein
the user terminal includes
content transmission request transmission means, including the terminal identification information transmission means and the data identification information transmission means, for transmitting a content transmission request to the application server system via the connection control system, the content transmission request including the terminal identification information, the data identification information, and a communication bandwidth necessary for transmitting content data identified by the data identification information from the application server system to the user terminal, and
the connection establishing means is adapted to, when receiving the content transmission request from the user terminal, perform band reservation processing to reserve a communication band having the communication bandwidth included in the content transmission request between the application server system and the user terminal.

5. The content distribution system according to Claim 4, wherein
the application server system includes
response information transmission means for, when receiving the content transmission request, if the data identification information included in the received content transmission request and data identification information for identifying the content data selected by the data selection means based on the content transmission request differ from each other, transmitting first response information, to the connection control system, the first response information including the data identification information for identifying the content data selected by the data selection means, and a communication bandwidth necessary for transmitting the content data selected by the data selection means from the application server system to the user terminal.

6. The content distribution system according to Claim 5, wherein
the connection establishing means is adapted to, when the connection control system receives the first response information from the application server system, transmit the first response information to the user terminal and release the reserved communication band, and
the content transmission request transmission means is adapted to, when the user terminal receives the first response information, transmit the content transmission request including the data identification information and the communication bandwidth which are included in the first response information, to the application server system via the connection control system.

7. The content distribution system according to Claim 5, wherein
the connection establishing means is adapted to, when the connection control system receives the first response information from the application server system, transmit the first response information to the user terminal and change the communication bandwidth of the reserved communication band to the communication bandwidth included in the first response information, and
the content transmission request transmission means is adapted to, when the user terminal receives the first response information, transmit the content transmission request including the data identification information and the communication bandwidth which are included in the first response information, to the application server system via the connection control system.

8. The content distribution system according to Claim 7, wherein the connection establishing means is adapted not to perform the band reservation processing if, when receiving, the content transmission request from the user terminal, the communication bandwidth of the reserved communication band coincides with the communication bandwidth, included in the content transmission request.

9. The content distribution system according to any of Claims 5 to 8, wherein
the response information transmission means is adapted to, when the application server system receives the content transmission request, if the data identification information included in the received content transmission request coincides with the data identification information, for identifying the content data selected by the data selection means based on the content transmission request, transmit, to the connection control system, second response information for instructing a communication relay device to fix the communication band, the communication relay device constituting the reserved communication band and relaying communication, and
the connection establishing means is adapted to, when receiving the second response information from the application server system, perform band fixing processing to instruct the communication relay device to fix the communication band, the communication relay device constituting the reserved communication band and relaying communication.

10. The content distribution system according to any of Claims 5 to 9, wherein
the first response information is information representing a redirect request for instructing transmission of the content transmission request including the data identification information and the communication band width which are included in the first response information, to the application server system.

11. The content distribution system according to Claim 5, wherein
the connection establishing means is adapted to, when the connection control system receives the first response information from the application server system, change the communication bandwidth of the reserved communication band to the communication bandwidth included in the first response information, and transmit the content transmission request including the data identification information and the communication bandwidth which are included in the received first response information, to the application server system.

12. The content distribution system according to any of Claims 1 to 11, wherein
the application server system includes available band information acquisition means for acquiring available band information representing a communication bandwidth which is available between the application server system and the user terminal, and
the data selection means is further adapted to select the content data based on the acquired available band information.

13. The content distribution system according to any of Claims 1 to 12, wherein
the application server system includes
processing load information, acquisition means for acquiring processing load information representing a processing load of the application server system , and the data data selection means is further adapted to select the content data based on the acquired processing load information.

14. The content distribution system according to any of Claims 1 to 13, wherein
the terminal attribute information, includes at least one of items of information each representing a resolution of a display included in the user terminal, an information processing capability of a processing device included in the user terminal, a formant of content data which is able to be output by the user terminal, or a storage capacity of a storage device included in the user terminal.

15. A content distribution method applied to a content distribution system including a user terminal,an application server system, and a connection control system, the method comprising:
acquiring, by the application server system, terminal attribute information representing a capability of the user terminal, the capability being a capability that based on content data representing content, the user terminal outputs the content;
selecting, by the application server system, content data representing content based on the acquired terminal attribute information;
establishing, by the connection control system, a connection between the application server system and the user terminal, the connection having a communication bandwidth necessary for transmitting the selected content data from the application server system to the user terminal; and
transmitting, by the application server system, the selected content data to the user terminal with use of the established connection.

16. The content distribution method according to Claim 15, further comprising:
transmitting, by the user terminal, terminal identification information for identifying the user terminal to the application server system;
receiving, by the application server system, the terminal identification information transmitted by the user terminal; and
acquiring, by the application server system, the terminal attribute information stored in association with the received terminal identification information in a storage device which stores the terminal identification information and the terminal attribute information in association with each other.

17. The content distribution method according to Claim 15 or 16, further comprising:
transmitting, by the user terminal, data identification information for identifying the content data to the application server system;
receiving, by the application server system, the data identification information transmitted by the user terminal; and
selecting, by the application server system, content data representing content identical to the content represented by the content data identified by the received data identification information.

18. The content distribution method according to Claim 17, further comprising:
transmitting, by the user terminal, a content transmission request to the application server system via the connection control system, the content transmission request including the terminal identification information, the data identification information, and a communication bandwidth for transmitting content data identified by the data identification information from the application server system to the user terminal, and
by the connection control system, when receiving the content transmission request from the user terminal, performing band reservation processing to reserve a communication band having the communication bandwidth included in the content transmission request between the application server system and the user terminal.

19. The content distribution method according to Claim !8, further comprising
by the application server system, when receiving the content transmission request, if the data identification information included in the received content transmission request and data identification information for identifying the content data selected based on the content transmission request differ from each other, transmitting first response information to the connection control system, the first response information including the data identification information for identifying the selected content data and a communication bandwidth necessary for transmitting the selected content data from the application server system to the user terminal.

20. The content distribution method according to Claim 19, further comprising:
by the connection control system, when receiving the first response information from the application server system, transmitting the first response information to the user terminal and releasing the reserved communication band; and
by the user terminal, when receiving the first response information, transmitting the content transmission request including the data identification information and the communication bandwidth which are included in the first response information, to the application server system via the connection control system.

21. The content distribution method according to Claim 19, further comprising:
by the connection control system, when receiving the first response information from the application server system, transmitting the first response information to the user terminal and changing the communication bandwidth of the reserved communication band to the communication bandwidth included in the first response information; and
by the user terminal, when receiving the first response information, transmitting the content transmission request including the data identification information and the communication bandwidth which are included in the first response information, to the application server system via the connection control system.

22. A server device comprising:
terminal attribute information acquisition means for acquiring terminal attribute information representing a capability of a user terminal, the capability being a capability that based on content data representing content, the user terminal outputs the content; and
data selection means for selecting content data representing content based on the acquired terminal attribute information.

23. The server device according to Claim 22, further comprising
content transmission means for transmitting the selected content data to the user terminal with use of a connection established between the user terminal and the server device by a connection control system.

24. The server device according to Claim 22 or 23, further comprising:
terminal information storage means for storing terminal identification information for identifying the user terminal and the terminal attribute information in association with each other; and
terminal identification information reception means for receiving the terminal identification information transmitted by the user terminal, wherein
the terminal attribute information acquisition means is adapted to acquire the terminal attribute information stored in the terminal information storage means in association with the received terminal identification information.

25. The content distribution system according to any of Claims 22 to 24, further comprising
data identification information reception means for receiving data identification information for identifying the content data from the user terminal, wherein
the data selection means is adapted to select content data representing content identical to the content represented by the content data identified by the received data identification information.

26. The server device according to Claim 25, further comprising response information transmission means for, when receiving a content transmission request including the terminal identification information, the data identification information, and a communication bandwidth necessary for transmitting content data identified by the data identification information to the user terminal, if the data identification information included in the received content transmission request and data identification information for identifying the content data selected by the data selection means based on the content transmission request differ from each other, transmitting first response information to the connection control system, the first response information including the data identification information for identifying the content data selected by the data selection means and a communication bandwidth necessary for transmitting the content data selected by the data selection means to the user terminal.

27. A program for causing a server device to realize:
terminal attribute information acquisition means for acquiring terminal attribute information representing a capability of a user terminal, the capability being a capability that based on content data representing content, the user terminal outputs the content; and
data selection means for selecting content data representing content based on the acquired terminal attribute information,

28. The program according to Claim 27, for further causing the server device to realize
content transmission means for the selected content data to the user terminal with use of a connection established between the user terminal and the server device by a connection control system.

29. A server device comprising
connection establishing means for establishing a connection between an application server system and a user terminal, the connection having a communication bandwidth necessary for transmitting content data selected by the application server system from the application server system to the user terminal.

30. The server device according to Claim 29, wherein
the connection establishing means is adapted to, when receiving a content transmission request from the user terminal, the content transmission request including terminal identification information for identifying the user terminal, data identification information for identifying the content data, and a communication bandwidth necessary for transmitting the content data identified by the data identification information, from the application server system to the user terminals, perform band reservation processing to reserve a communication band having the communication bandwidth included in the content transmission request between the application server system and the user terminal.

31. The server device according to Claim 30, wherein
the connection establishing means is adapted to, when receiving, a first response information from the application server system, the first response information including the data identification information for identifying the content data selected by the application server system and the communication bandwidth necessary for transmitting the content data identified by the data identification information from the application server system to the user terminal, transmit the first response information to the user terminal and release the reserved communication band.

32. The server device according to Claim 30, wherein
the connection establishing means is adapted to, when receiving a first response information from the application server system, the first response information including the data identification information for identifying the content data selected by the application server system and the communication bandwidth necessary for transmitting the content data identified by the data identification information from the application server system to the user terminal, transmit the first response information to the user terminal and change the communication bandwidth of the reserved communication band to the communication bandwidth included in the first response information.

33. A program for causing a server device to realize
connection establishing means for establishing a connection between an application server system and a user terminal, the connection having a communication bandwidth necessary for transmitting content data selected by the application server system from the application server system to the user terminal.

34. The program according to Claim 33, wherein
the connection establishing means is adapted to, when receiving a content transmission request from the user terminal, the content transmission request including terminal identification information for identifying the user terminal, data identification information for identifying the content data, and a communication bandwidth necessary for transmitting the content data identified by the data identification information from the application server system to the user terminal, perform band reservation processing to reserve a communication band having the communication bandwidth included in the content transmission request between the application server system the user terminal.

35. The program according to Claim 34, wherein
the connection establishing means is adapted to, when receiving a first response information from the application server system, the first response information including the data identification information for identifying the content data selected by the application server system and the communication bandwidth necessary for transmitting the content data identified by the data identification information from the application server system to the user terminal, transmit the first response information to the user terminal and release the reserved communication band.

36. The program according to Claim 34, wherein
the connection establishing means is adapted to, when receiving a first response information from the application server system, the first response information including the data identification information for identifying the content data selected by the application server system and the communication bandwidth necessary for transmitting the content data identified by the data identification information from the application server system to the user terminals, transmit the first response information to the user terminal and change the communication bandwidth of the reserved communication band to the communication bandwidth included in the first response information.
